# EUROPEAN PATENT APPLICATION

(11) **EP 2 843 027 A1**
(43) Date of publication of application: **04.03.2015**
(21) Application number: 13780762.4
(22) Date of filing: 18.04.2013
(51) Int. Cl.: C09K 19/42, C08F 220/10, G02F 1/13

(54) **LIQUID CRYSTAL COMPOSITION COMPRISING POLYMERIZABLE COMPOUNDS AND LIQUID CRYSTAL DISPLAY ELEMENT USING SAME**

(30) Priority: 24.04.2012 JP 2012098705
(71) Applicant: DIC Corporation, Tokyo 174-8520 (JP)
(72) Inventor: KURISAWA, Kazuki, Kitaadachi-gun Saitama 362-8577 (JP); TANAKA, Yoshikiyo, Kitaadachi-gun Saitama 362-8577 (JP); KAWAKAMI, Shotaro, Kitaadachi-gun Saitama 362-8577 (JP)
(74) Representative: Beckmann, Claus
(86) International application number: PCT/JP2013/061506
(87) International publication number: WO 2013/161669

(57) **Abstract**

A polymerizable liquid crystal compositionof the present invention contains at least twopolymerizable compounds having different rates of polymerization reaction and a liquid crystalcompound. The polymerizable liquid crystal composition is characterized in that the rate of polymerization reaction of the polymerizable compounds contained in the composition can be easily made suitable for the specification of a UV irradiation lamp, the pretilt angle, which affects the display performance, can be easily controlled, a problem of unpolymerization of polymerizable compounds, whichaffects display unevenness, image sticking, etc., can be solved, and thus a PSA liquid crystal display element having good performance and high reliability can be produced. The polymerizable liquid crystal composition is suitable asa practical liquid crystal composition.

## Description

### Technical Field

The present invention relates to a liquid crystal composition containing polymerizable compounds and a liquid crystal display element using the liquid crystal composition.

### Background Art

Polymer sustained alignment ((PSA), including polymer stabilized (PS) liquid crystal display elements) liquid crystal display devices have a structure in which a polymer structure is formed in a cell in order to control the pretilt angle of liquid crystal molecules, and are practically used asnext-generation liquid crystal display elements because of their high-speed responsiveness and high contrast.

Such a PSA liquid crystal display element is produced by injecting a polymerizableliquid crystalcomposition containing a liquid crystal compound and a polymerizable compound between substrates, and polymerizing the polymerizable compound while aligning liquid crystal molecules by applying a voltage, thus fixing the alignment of the liquid crystal molecules. In the step of polymerizing a polymerizable compound in such a PSA liquid crystal display element, the rate of polymerization reaction of the polymerizable compound is important for productivity. Furthermore, the rate of polymerization reaction of the polymerizable compound is important in the adjustment of the pretilt angle, which affects the contrast, the response speed, etc. of the PSA liquid crystal display element, and the amount of residue of the polymerizable compound, which affects reliability such as display unevenness and image sticking. The rate of polymerization reaction of a polymerizable compounddepends on the wavelength and the irradiation intensity of a UV irradiation lamp. Accordingly, the development of a polymerizable liquid crystal composition containing a polymerizable compound that is suitable for the specification of the UV irradiation lamp has been desired. However, the development is not necessarily sufficient. Specifically, in the case where the rate of polymerization reaction of a polymerizable liquid crystal composition is adjusted, the UV absorption wavelength of the polymerizable compound is adjusted, by changing the skeleton structure and the side-chain structure of the polymerizable compound, to the emission wavelength of the UV irradiation lamp to be used, or the type of reaction group of the polymerizable compound is changed. However,in such a case, it is necessary to select a new polymerizable compound, for example, the structure of a polymerizable compound is suitably changed depending on the UV irradiation lamp to be used.

With regard to the technique for adjusting the rate of polymerization reaction, it is disclosed that a PSA liquid crystal element can be produced by using a liquid crystal compound having a terphenyl ring as a liquid crystal compound while the rate of polymerizationreaction is reduced(PTL 1). However, it is not easy to make the rate of polymerization reaction suitable for the specification of a UV irradiation lamp by changing the skeleton structure of a polymerizable compound. Furthermore, for example, the voltage holding ratio (VHR) of the PSA liquid crystal element is decreased by using theliquid crystalcompound having a terphenyl ring. Thus, there is a concern of adverse effect on reliability.

As described above, it is not easy to obtain a polymerizable liquid crystal composition that provides a PSA liquid crystal element satisfying good productivity, a high display performance, and a high quality performance as a result of the adjustment of the rate of polymerization reaction to an appropriate value by the UV irradiation lamp used.

### Citation List

### Patent Literature

PTL 1: U.S. Patent No. 8092871 specification

### Summary of Invention

### Technical Problem

An object to be achieved by the present invention is to provide a polymerizable liquid crystal composition in which, in the productionof a PSA liquid crystal display element, the rate of polymerization reaction of a polymerizable compound can be easily adjusted to the specification of a UV irradiation lamp to be used, and as a result, which can provide a liquid crystaldisplay element having a high display performance and being capable of preventing or substantially preventing display problems such as display unevenness and image sticking from occurring. Another object to be achieved by the present invention is to provide a liquid crystaldisplay element produced by using the polymerizable liquid crystal composition.

### Solution to Problem

The inventors of the present invention conducted studies on various polymerizable compounds and various non-polymerizable liquid crystal materials. As a result, it was found that the above objects can be achieved by a polymerizableliquid crystalcomposition containingat least two polymerizable compounds having different rates of polymerization reaction and a liquid crystal compound. This finding led to the completion of the present invention.

Specifically, provided is a liquid crystal composition containingat least two polymerizable compounds having different rates of polymerization reaction. Further provided is a liquid crystal display element using the liquid crystal composition.

### Advantageous Effects of Invention

According to the polymerizable liquid crystalcomposition of the present invention, the rate of polymerizationreaction of polymerizable compounds contained in the composition can be easily made suitable for the specification of a UV irradiation lamp. Accordingly,the pretilt angle, which affects the display performance, can be easily controlled, unpolymerized polymerizable compounds, which affect display unevenness, image sticking, etc. are not present or are not substantially present, and thus do not or substantially do not affect reliability of the resultingliquid crystal display element. Furthermore, the energy cost for producing the liquid crystal display element can be reduced to improve production efficiency. Thus, the polymerizable liquid crystalcomposition of the present invention is very useful as a liquid crystal material for the liquid crystal display element.

### Description of Embodiments

A polymerizable compound used in a liquid crystalcomposition of the present invention, the compositioncontaining at least twopolymerizable compounds having different rates of polymerization reaction, has a plurality of ring structures in the molecular structure thereof, and is represented by, for example, general formula (II):

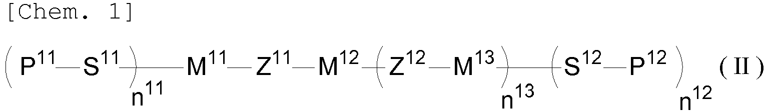

In general formula (II), P¹¹ and P¹² each represent a polymerizable functional group. Specific examples of the polymerizable functional group include the structures shown below.

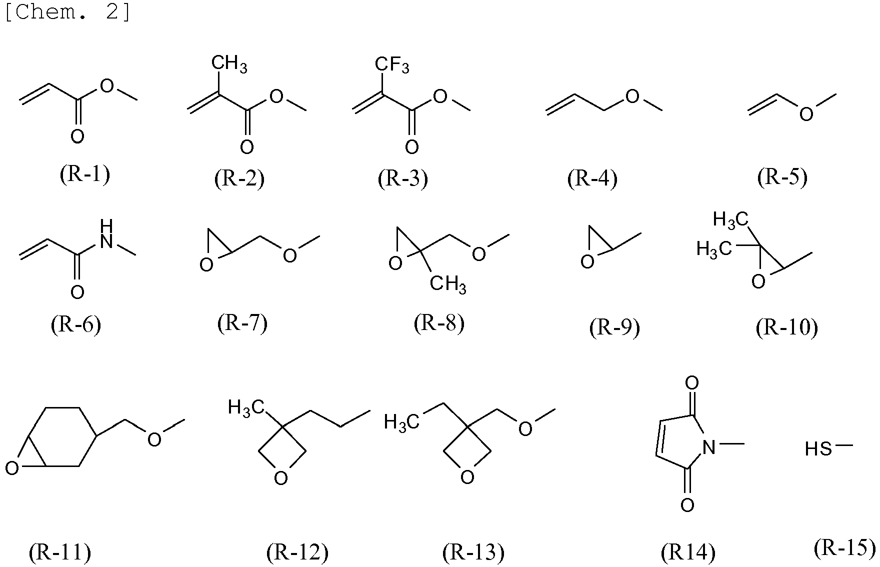

These polymerizable groups are cured by radical polymerization, radical additionpolymerization, cationic polymerization, and anionic polymerization. In particular, in the case where ultraviolet polymerization is employed as the polymerization method, formula (R-1), formula (R-2), formula (R-4), formula (R-5), formula (R-7), formula (R-11), formula (R-13), or formula (R-15) is preferable, formula (R-1), formula (R-2), formula (R-7), formula (R-11), or formula (R-13) is preferable, and formula (R-1) or formula (R-2) is still more preferable.

S¹¹ and S¹² each independently represent a single bond or an alkyl group having 1 to 15 carbon atoms, where at least one -CH₂- in the alkyl group may be substituted with -O-, - CH=CH-, -C=C-, -CO-, -OCO-, or -COO- so that oxygen atoms are not directly adjacent to each other. S¹¹ and S¹² are each preferably a single bond or an alkyl group having 1 to 15 carbon atoms, or an alkyl group having 1 to 15 carbon atoms, where one -CH₂- in the alkyl group is substituted with -O-so that oxygen atoms are not directly adjacent to each other. M¹¹, M¹², and M¹³ are each preferably a group selected from the group consisting of
(a) a trans-1,4-cyclohexylene group (where one methylene group or two or more non-adjacent methylene groups in the trans-1,4-cyclohexylene group may each be substituted with - O- or -S-),
(b) aphenylene group (where one -CH= or two or more non-adjacent -CH= in the phenylene group may each be substituted with a nitrogen atom, hydrogen atoms contained in any of these groups may be independently unsubstituted, or hydrogen atoms contained in any of these groups may be substituted with a fluorine atom, a chlorine atom, an alkyl group having 1 to 8 carbon atoms, a halogenated alkyl group having 1 to 8 carbon atoms, a halogenated alkoxy group having 1 to 8 carbon atoms, or an alkoxy group having 1 to 8 carbon atoms), and
(C)a cyclohexenylene group, a bicyclo[2.2.2]octylene group, a piperidine group, a naphthalene group, a decahydronaphthalene group, and atetrahydronaphthalene group. When a plurality of M¹³s are present, they may be the same or different. M¹¹, M¹², and M¹³ are each preferably a trans-1,4-cyclohexylene group, a naphthalene group, or a phenylene group where hydrogen atoms contained in the phenylene group are independently unsubstituted, or hydrogen atoms contained in the phenylene group are substituted with a fluorine atom, a chlorine atom, or an alkyl group having 1 to 8 carbon atoms, and more preferably a phenylene group where hydrogen atoms contained in the phenylene group are independently unsubstituted, or hydrogen atoms contained in the phenylene group are substituted with a fluorine atom, a chlorine atom, or an alkyl group having 1 to 8 carbon atoms.
   Z¹¹ and Z¹² are each independently preferably a single bond, -O-, -S-, -OCH₂-, -CH₂O-, -CO-, -C₂H₄-,-COO-, -OCO-, -OCOOCH₂-, -CH₂OCOO-, -CO-NR¹¹-, -NR¹¹-CO-, -SCH₂-, -CH₂S-, -CH=CH-COO-, -OOC-CH=CH-, -COOC₂H₄-, -OCOC₂H₄-, -C₂H₄OCO-, -C₂H₄COO-,-OCOCH₂-, -CH₂COO-, -CH=CH-, -CF=CH-, -CH=CF-, -CF₂-, -CF₂O-, -OCF₂-, -CF₂CH₂-, -CH₂CF₂-, -CF₂CF₂-, or -C=C- (where R¹¹ represents an alkyl group having 1 to 4 carbon atoms), more preferably a single bond, -O-, -OCH₂-, -CH₂O-, -CO-, -C₂H₄-, -COO-, -OCO-, -OCOOCH₂-, -CH₂OCOO-, -CO-, -CH=CH-COO-, -OOC-CH=CH-, -COOC₂H₄-, -OCOC₂H₄-, -C₂H₄OCO-, -C₂H₄COO-, -OCOCH₂-,-CH₂COO-, -CH=CH-, -CF=CH-, -CH=CF-, -CF₂-, -CF₂O-, -OCF₂-,-CF₂CH₂-, -CH₂CF₂-, -CF₂CF₂-, or -C=C-, and still more preferably a single bond, -O-, -OCH₂-, -CH₂O-, -CO-, -C₂H₄-, -COO-, -OCO-, -OCOOCH₂-, -CH₂OCOO-, -CO-, -CH=CH-COO-, -OOC-CH=CH-, -COOC₂H₄-, -OCOC₂H₄-, -C₂H₄OCO-, -C₂H₄COO-, -OCOCH₂-,-CH₂COO-, -CH=CH-, -CF=CH-, or -C=C-. In general formula (II), n¹¹ and n¹² each independently represent 0, 1, 2, or 3, n¹¹ + n¹²represents 2 to 6, and n¹³ represents 0, 1, or 2. In general formula (II), n¹¹ and n¹² each independently preferably represent 1 or 2, and n¹¹ +
   n¹² preferablyrepresents 2 or 3.

More specifically, examples of the compound represented by general formula (II) preferably include compounds represented by general formulae (II-1) to (11-42) below.

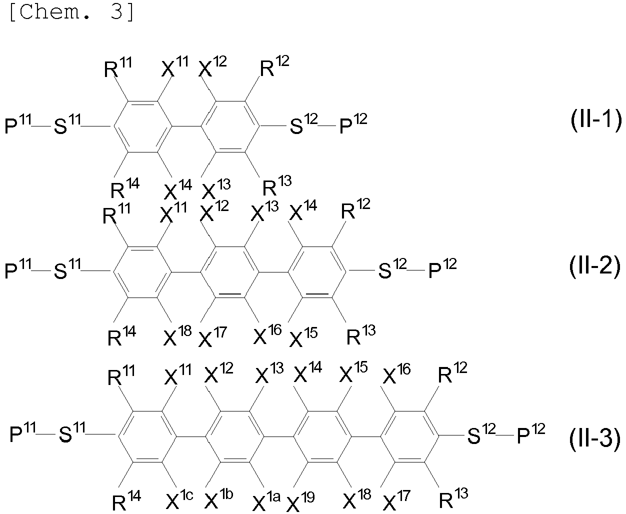

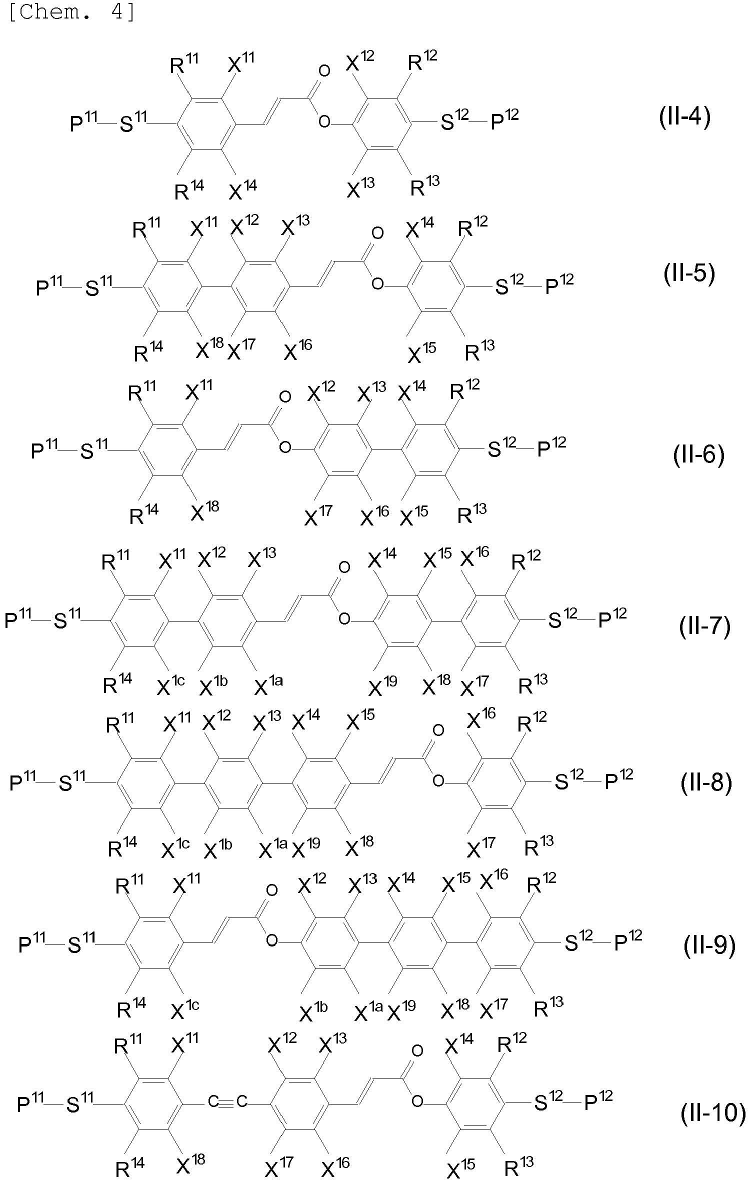

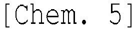

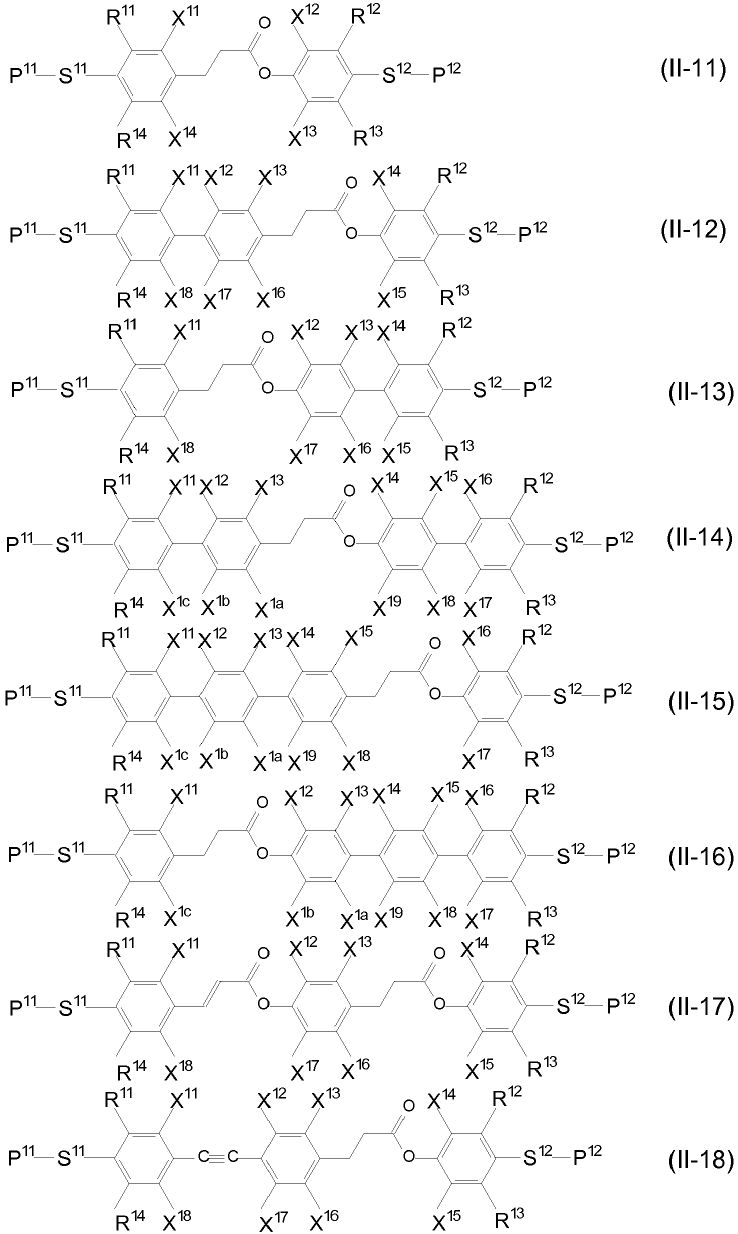

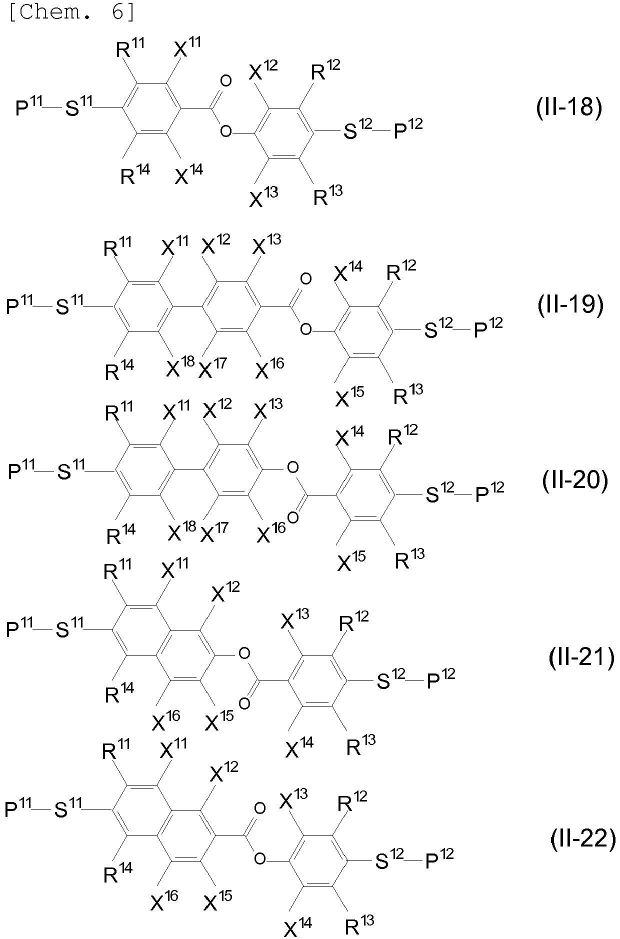

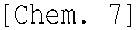

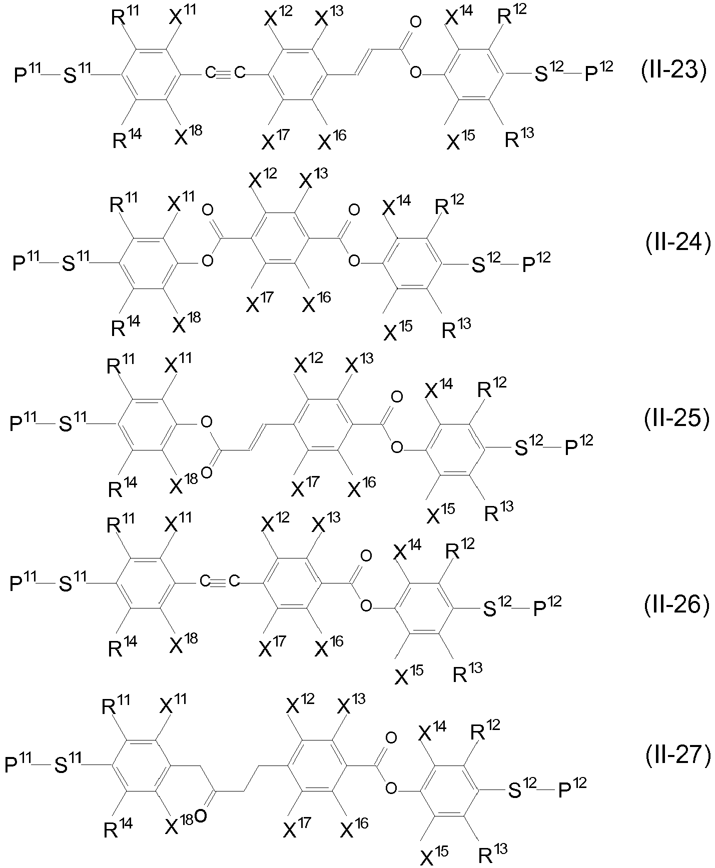

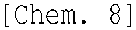

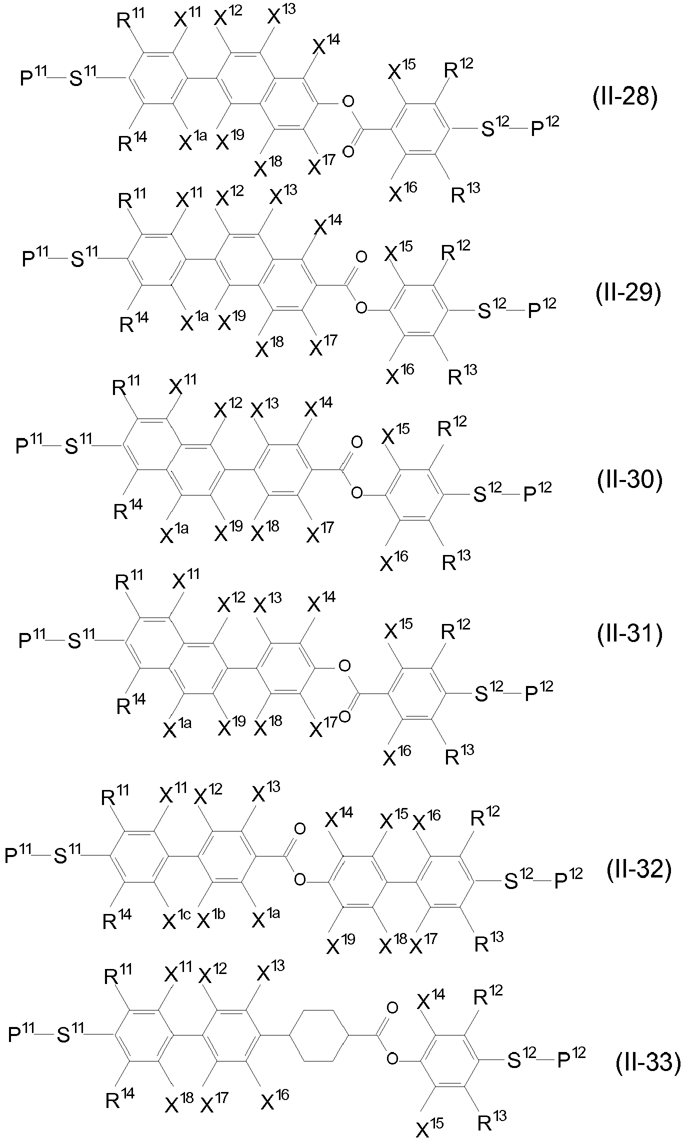

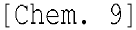

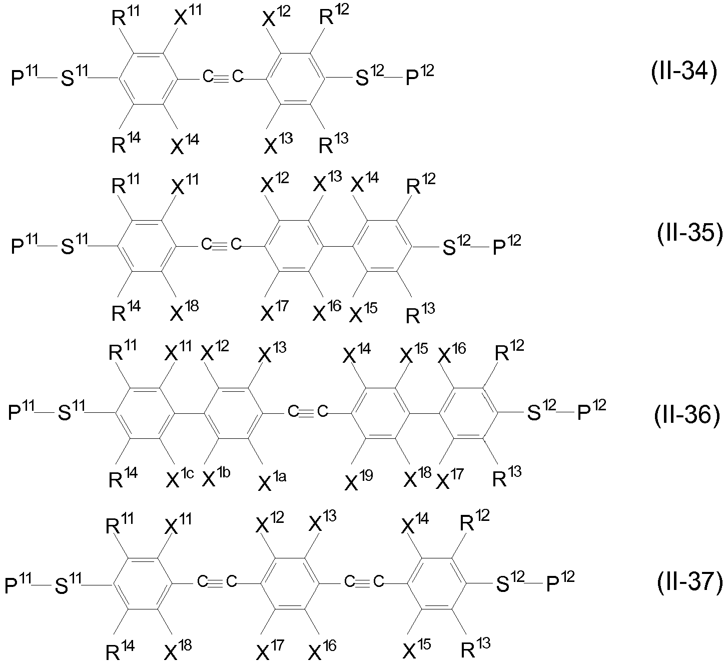

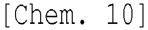

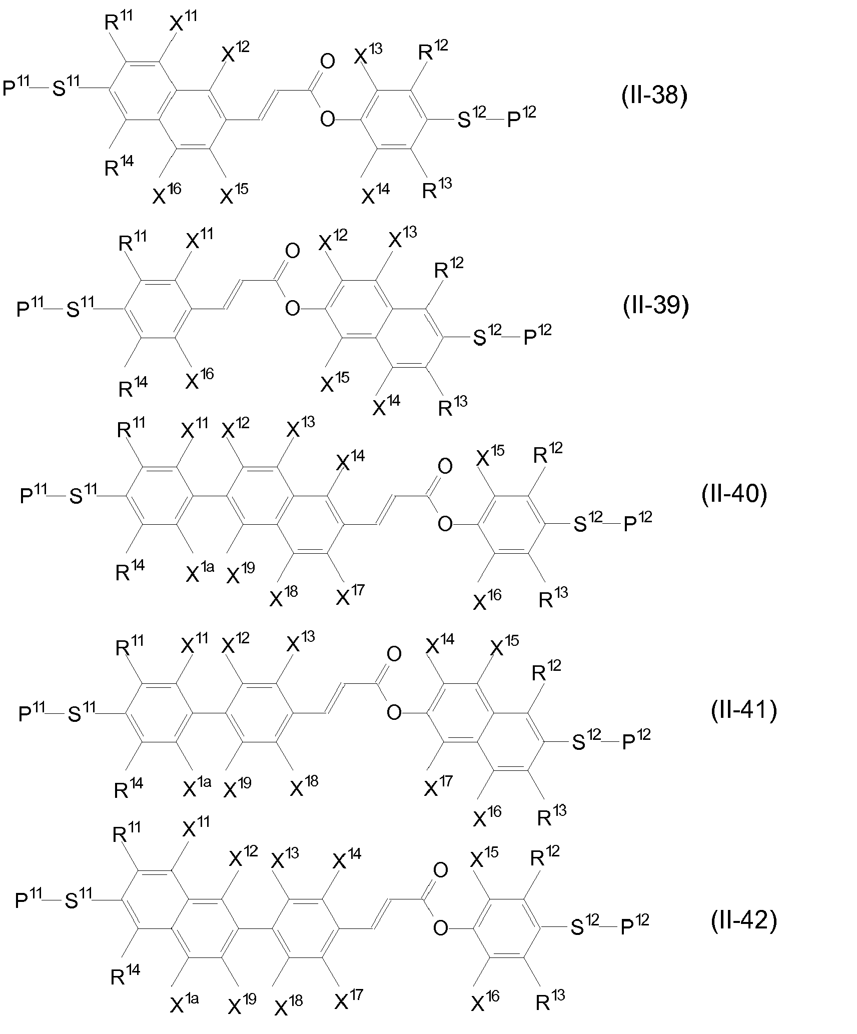

(In the formulae, P¹¹ and P¹² each independently represent a polymerizable functional group; S¹¹ and S¹² each independently represent a single bond or an alkyl group having 1 to 15 carbon atoms, where at least one -CH₂- in the alkyl group may be substituted with -O-, -CH=CH-, -CO-, - C=C- -OCO-, or -COO- so that oxygen atoms are not directly adjacent to each other; R¹¹ and R¹⁴ each independently represent P¹¹-S¹¹-, a hydrogen atom, a fluorine atom, a chlorine atom, an alkyl group having 1 to 8 carbon atoms, a halogenated alkyl group having 1 to 8 carbon atoms, a halogenated alkoxy group having 1 to 8 carbon atoms, or an alkoxy group having 1 to 8 carbon atoms; R¹² and R¹³ each independently represent -S¹²-P¹², a hydrogen atom, a fluorine atom, a chlorine atom, an alkyl group having 1 to 8 carbon atoms, a halogenated alkyl group having 1 to 8 carbon atoms, a halogenated alkoxy group having 1 to 8 carbon atoms, or an alkoxy group having 1 to 8 carbon atoms; and X¹¹ to X^{1c} represent a hydrogen atom, a fluorine atom, a chlorine atom, an alkyl group having 1 to 8 carbon atoms, a halogenated alkyl group having 1 to 8 carbon atoms, a halogenated alkoxy group having 1 to 8 carbon atoms, or an alkoxy group having 1 to 8 carbon atoms. When a plurality of P¹¹s, P¹²s, S¹¹s, and S¹²s are present, they may be the same or different.) Furthermore, the compounds represented by general formula (II-1), general formula (II-2), general formulae (II-4) to (II-6), general formulae (11-10) to (II-13), general formulae (11-17) to (11-27), general formula (11-34), general formula (11-35), and general formulae (11-37) to (11-39) are more preferable.

The polymerizable liquid crystal composition of the present invention contains at least two polymerizable compounds, preferably two to five polymerizable compounds, more preferably two to four polymerizable compounds, and particularly preferably two or three polymerizable compounds. The lower limit of the content of the polymerizable compounds in the polymerizable liquid crystal composition is preferably 0.01% by mass and more preferably 0.03% by mass. The upper limit of the content of the polymerizable compounds in the polymerizable liquid crystal composition is preferably2.0% by mass and more preferably 1.0% by mass.

The polymerizable liquid crystal composition of the present invention contains polymerizable compounds having different rates of polymerization reaction. Herein, the term "rate of polymerization reaction"represents the amount of reaction per unit time during which a reactiongroup of a polymerizable compound in a polymerizable liquid crystal composition is decreased by a polymerization reaction. At least twopolymerizable compounds having different rates of polymerization reaction are selected as the polymerizable compounds used in the present invention. The rate of polymerization reaction of a polymerizable compound significantly varies depending on an ultraviolet (UV) absorption wavelength range of the polymerizable compound. A polymerizable compound that absorbs light of the emission wavelength of a UV irradiation device efficiently absorbs UV light to obtain a large amount of energy for polymerization, and thus the rate of polymerization reaction of the polymerizable compoundbecomes high. On the other hand, in the case where a polymerizable compound does not have UV absorption to light of the emission wavelength, polymerization by UV energy does not proceed. Accordingly, in this case, only a reaction due to thermal energy and other radicals occurs, and the rate of polymerization reaction becomes relatively low. That is, the resulting composition can be controlled so as to have different rates of polymerization reaction by selecting polymerizable compounds having different UV absorption wavelengths. In general, a UV irradiation device having an emission wavelength range near 365 nm is well known. For example, by using a polymerizable compound that absorbs UV light of 350 nm and a polymerizable compound that does not absorb UV light of 350 nm, polymerizable compoundshaving different rates of polymerization reaction can be obtained. The rate of polymerization reaction is changed by the magnitude of absorbance of apolymerizable compound besides the UV absorption wavelength of the polymerizable compound.Accordingly, it is also effective to select polymerizable compounds having different values of absorbance of light of the emission wavelength of a UV irradiation device. Specifically, the absorption wavelength and the absorbance can be changed by changing the number of aromatic rings, the type of linking group, the type of side chain, or the like in the polymerizable compound represented by general formula (II). Examples of the combination includea combination of a polymerizable compound whose number of rings is two (where n¹³ is 0) and a polymerizable compound whose number of rings is more than two (where n¹³ is 1 or 2),a combination of a polymerizable compound that does not have a linking group (where Z¹¹ and Z¹² are each a single bond) and a polymerizable compound that has a linking group (where at least one of Z¹¹ and Z¹² is not a single bond), and a combination of a polymerizable compound that does not have a spacer group (where S¹¹ and S¹² are each a single bond) and a polymerizable compound that has a spacer group (where at least one of S¹¹ and S¹² is not a single bond). Typical examples of the preferable combinations include general formula (II-1) and general formula (II-5), general formula (II-1) and general formula (11-38), general formula (II-1) and general formula (11-22), general formula (II-1) and general formula (II-2), general formula (II-1) and general formula (II-13), general formula (II-1) (where S¹¹ and S¹² are each a single bond) and general formula (II-1) (where at least one of S¹¹ and S¹² is not a single bond), general formula (II-1) (where n¹¹ and n¹² are each 0) and general formula (II-1) (at least one of n¹¹ and n¹² is 1, 2, or 3), general formula (II-2) and general formula (11-38), general formula (II-2) (where n¹¹ and n¹² are each 0) and general formula (II-2) (where at least one of n¹¹ and n¹² is 1, 2, or 3), and general formula (II-2) (S¹¹ and S¹² are each a single bond) and general formula (II-2)(where at least one of S¹¹ and S¹² is not a single bond).

Furthermore, polymerizable compounds having different rates of polymerization reaction can be obtained by changing the type and the number of reaction groups in the polymerizable compounds. Specifically, by appropriately selecting an acryloyloxy group and a methacryloyloxy group functioning as reaction groups, polymerizable compounds having various rates of polymerization reaction can be obtained. In addition, the reaction efficiency can be increased by increasing the number of reactiongroups, and thus the same effect can be obtained.
The polymerizable liquid crystal composition of the present invention may contain a compound represented by general formula (I).

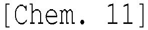

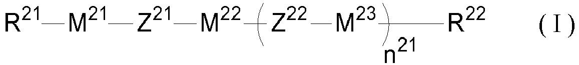

In general formula (I), R²¹ and R²² each independently represent an alkyl group having 1 to 15 carbon atoms, where at least one -CH₂- in the alkyl group may be substituted with -O-, -CH=CH-, -CO-, -OCO-, -COO- -C=C-, -CF₂O-, or-OCF₂- so that oxygen atoms are not directly adjacent to each other and at least one hydrogen atom in the alkyl group maybe optionallysubstituted with a halogen. R²¹ and R²² each preferably represent an alkyl group having 1 to 12 carbon atoms, an alkoxy group having 1 to 12 carbon atoms, an alkenyl group having 2 to 12 carbon atoms, or an alkenyloxy group having 2 to 12 carbon atoms, and more preferablyrepresent an alkyl group having 1 to 12 carbon atoms, an alkoxy group having 1 to 12 carbon atoms, or an alkenyl group having 2 to 12 carbon atoms.
M²¹, M²², and M²³ each independently preferablyrepresent a group selected from the group consisting of
(a) a trans-1,4-cyclohexylene group (where one methylene group or two or more non-adjacent methylene groups in the trans-1,4-cyclohexylenegroup may each be substituted with - O- or -S-),
(b) a 1,4-phenylene group (where one -CH= or two or more non-adjacent -CH= in the1,4-phenylene group may each be substituted with a nitrogen atom), a 2-fluoro-1,4-phenylene group, and a 3-fluoro-1,4-phenylene group, and
(c) a 1,4-cyclohexenylene group, a 1,4-bicyclo[2.2.2]octylene group, a piperidine-2,5-diyl group, a naphthalene-2,6-diyl group, a decahydronaphthalene-2,6-diyl group, and a 1,2,3,4-tetrahydronaphthalene-2,6-diyl group.
   M²¹, M²², and M²³ each independently more preferably represent a trans-1,4-cyclohexylene group, a 1,4-phenylene group, a 3-fluoro-1,4-phenylene group, or a 3,5-difluoro-1,4-phenylene group, and still more preferably a trans-1,4-cyclohexylene group or a 1,4-phenylene group. At least one of M²¹, M²², and m²³ is particularly preferably a trans-1,4-cyclohexylene group. When a plurality of M²³s are present, they may be the same or different.
   Z²¹ and Z²² are each independently preferably a single bond, -CH₂CH₂-, -(CH₂)₄-, -OCH₂-, -CH₂O-, -OCF₂-, -CF₂O-, -CH=CH-, - CH=N-N=CH-, or -C=C-, more preferably a single bond, -CH₂CH₂-, -(CH₂)₄-, or -C=C-, and particularly preferably a single bond or -CH₂CH₂-. When a plurality of Z²²s are present, they may be the same or different.

More specifically, the compound represented by general formula (I) is preferably selected from compounds represented by the group consisting of general formulae (I-A) to (I-P) below.

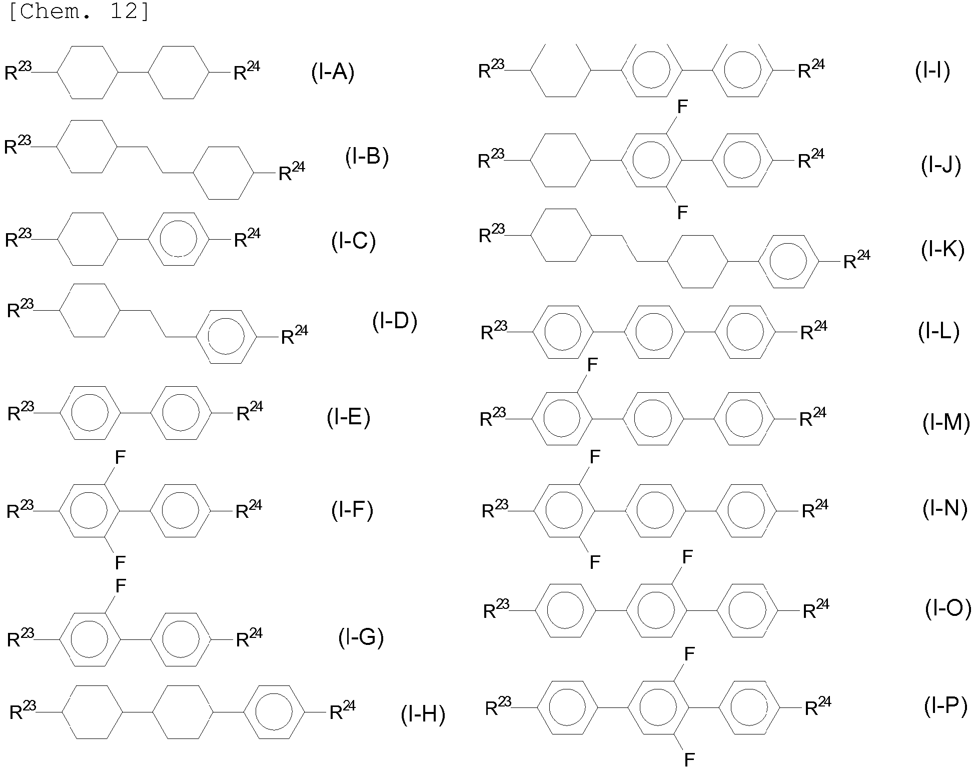

In the formulae, R²³ and R²⁴ each independently more preferablyrepresent an alkyl group having 1 to 10 carbon atoms, an alkoxy group having 1 to 10 carbon atoms, or an alkenyl group having 2 to 10 carbon atoms, and still more preferably an alkyl group having 1 to 5 carbon atoms or an alkoxy group having 1 to 10 carbon atoms.

Among compounds represented by general formulae (I-A) to (I-P), compounds represented by general formula (I-A), (I-B), (I-C), (I-E), (I-H), (I-I), or (I-K) are preferable, and compounds represented by general formula (I-A), (I-C), (I-E), (I-H), or (I-I) are more preferable.

In the present invention, at least one compound represented by general formula (I) is contained, one to ten compounds are preferably contained, and two to eight compounds are particularly preferably contained. The lower limit of the content of the compound represented by general formula (I) is preferably 5% by mass, more preferably 10% by mass, still more preferably 20% by mass, and particularly preferably 30% by mass. The upper limit of the content of the compound represented by general formula (I) is preferably 80% by mass, more preferably 70% by mass, and still more preferably 60% by mass.

The polymerizable liquid crystal composition of the present invention may contain a compound selected from the group consisting of compounds represented by general formulae (IIIa), (IIIb), and (IIIc): 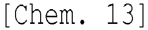 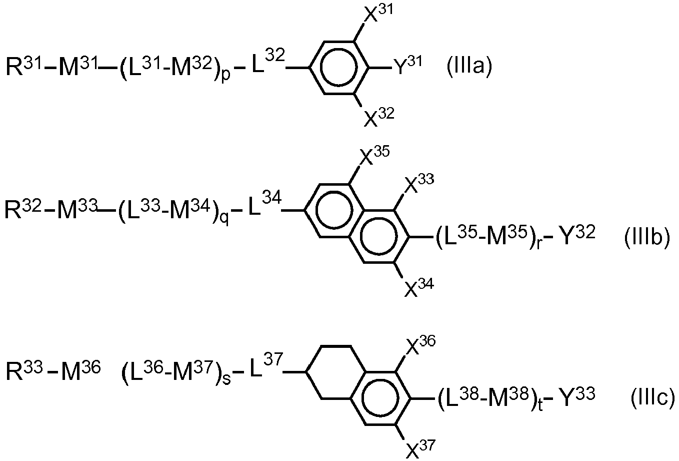 or a compound selected from the group consisting of compounds represented by general formulae (IVa), (IVb), and (IVc) :

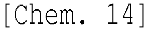

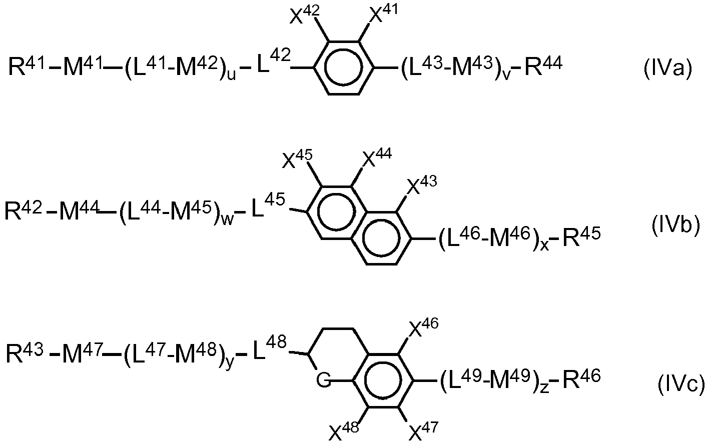

In the compounds represented by general formulae (IIIa), (IIIb), and (IIIc), R³¹, R³², and R³³ are each independently preferably an alkyl group having 1 to 10 carbon atoms, an alkoxy group having 1 to 10 carbon atoms, an alkenyl group having 2 to 10 carbon atoms, or an alkenyloxy group having 2 to 10 carbon atoms, more preferably a linear alkyl group having 1 to 10 carbon atoms, a linear alkoxy group having 1 to 10 carbon atoms, or an alkenyl group having 2 to 10 carbon atoms, and particularly preferably a linear alkyl group having 1 to 8 carbon atoms or an alkoxy group having 1 to 8 carbon atoms.

M³¹, M³², M³³, M³⁴, M³⁵, M³⁶, M³⁷, and M³⁸ are each independently preferably a trans-1,4-cyclohexylene group (where one methylene group or two or more non-adjacent methylene groups in the trans-1,4-cyclohexylene group may each be substituted with -O- or -S-), a 1,4-phenylene group (where one -CH= or two or more non-adjacent -CH= in the1,4-phenylene group may each be substituted with a nitrogen atom), a 1,4-cyclohexenylene group, a 1,4-bicyclo[2.2.2]octylene group, a piperidine-1,4-diyl group, a naphthalene-2,6-diyl group, a 1,2,3,4-tetrahydronaphthalene-2,6-diyl group, ora decahydronaphthalene-2,6-diyl group(where a hydrogen atom in any of these groups may be substituted with a cyano group, a fluorine atom, a trifluoromethyl group, a trifluoromethoxy group, or a chlorine atom),more preferably a trans-1,4-cyclohexylene group, a 1,4-phenylene group, a 3-fluoro-1,4-phenylene group, or a 3,5-difluoro-1,4-phenylene group, still more preferably a trans-1,4-cyclohexylene group or a 1,4-phenylene group, and particularly preferably a trans-1,4-cyclohexylene group.

L³¹, L³², L³³, L³⁴, L³⁵, L³⁶, L³⁷, and L³⁸ are each independentlypreferably a single bond, -OCO-, -COO-, -CH₂CH₂-, -(CH₂)₄-, -OCH₂-, -CH₂O-, -OCF₂-, -CF₂O-, or -C=C-, more preferably a single bond, -CH₂CH₂-, -(CH₂)₄-, or -C=C-, and particularly preferably a single bond or -CH₂CH₂-. X³¹, X³², X³³, X³⁴, X³⁵, X³⁶, and X³⁷ each independently represent a hydrogen atom or a fluorine atom,Y³¹, Y³², and Y³³ each independently preferablyrepresent a hydrogen atom, a fluorine atom, a chlorine atom, a cyano group, a thiocyanate group, a trifluoromethoxy group, a trifluoromethyl group, a 2,2,2-trifluoroethyl group, a difluoromethoxy group, or an alkyl group having 1 to 12 carbon atoms, more preferably a hydrogen atom, a fluorine atom, a chlorine atom, a cyano group, a trifluoromethoxy group, a trifluoromethyl group, a 2,2,2-trifluoroethyl group, or an alkyl group having 1 to 12 carbon atoms, and particularly preferably a fluorine atom, a trifluoromethoxy group, or a trifluoromethyl group. In the compounds represented by general formulae (IIIa), (IIIb), and (IIIc), p, q, r, s, and t each independently represent 0, 1, or 2, and q + r and s + t each represent 2 or less.

Among the structures formed by the combinations of the above alternatives, -CH=CH-CH=CH-, -C=C-C=C-, and -CH=CH-C=C- are not preferable from the viewpoint of chemical stability. Similarly, structures in which a hydrogen atom in any of these structures is substituted with a fluorine atom are also not preferable. Similarly, structures in which oxygen atoms are bonded to each other, structures in which sulfur atoms are bonded to each other, and structures in which a sulfur atom is bonded to an oxygen atom are also not preferable. Similarly, structures in which nitrogen atoms are bonded to each other, structures in which a nitrogen atom is bonded to an oxygen atom, and structures in which a nitrogen atom is bonded to a sulfur atom are also not preferable.

Specifically, a structure represented by general formula (IIIa-1) below is preferable.

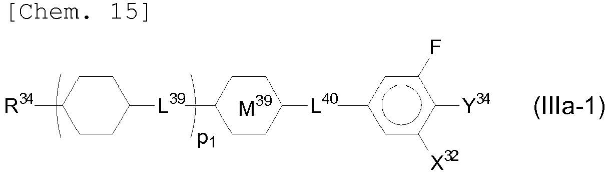

(In the formula, R³⁴ represents an alkyl group having 1 to 8 carbon atoms, an alkoxyl group having 1 to 8 carbon atoms, or an alkenyl group having 2 to 8 carbon atoms, L³⁹ and L⁴⁰ each independently represent a single bond, -CH₂CH₂-,-(CH₂)₄-, -OCH₂-, -CH₂O-, -OCF₂-, -CF₂O-, or -C=C-, M³⁹ represents a 1,4-phenylene group, a trans-1,4-cyclohexylene group, or a decahydronaphthalene-2,6-diyl group, X³² represents a hydrogen atom or a fluorine atom, p₁ represents 0 or 1, and Y³⁴ represents a cyano group, a fluorine atom, a chlorine atom, a trifluoromethyl group, a fluoromethoxy group, a difluoromethoxy group, or a trifluoromethoxy group.)

More specifically, structures represented by general formulae (IIIa-2a) to (IIIa-4d) below are preferable.

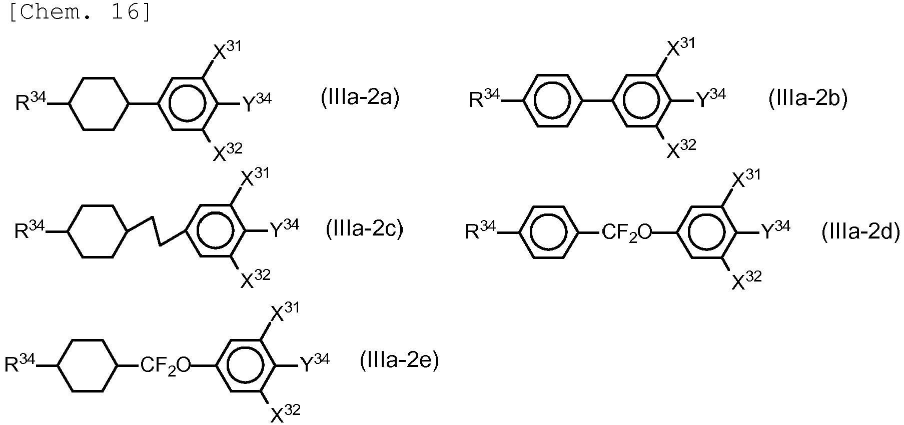

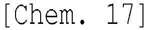

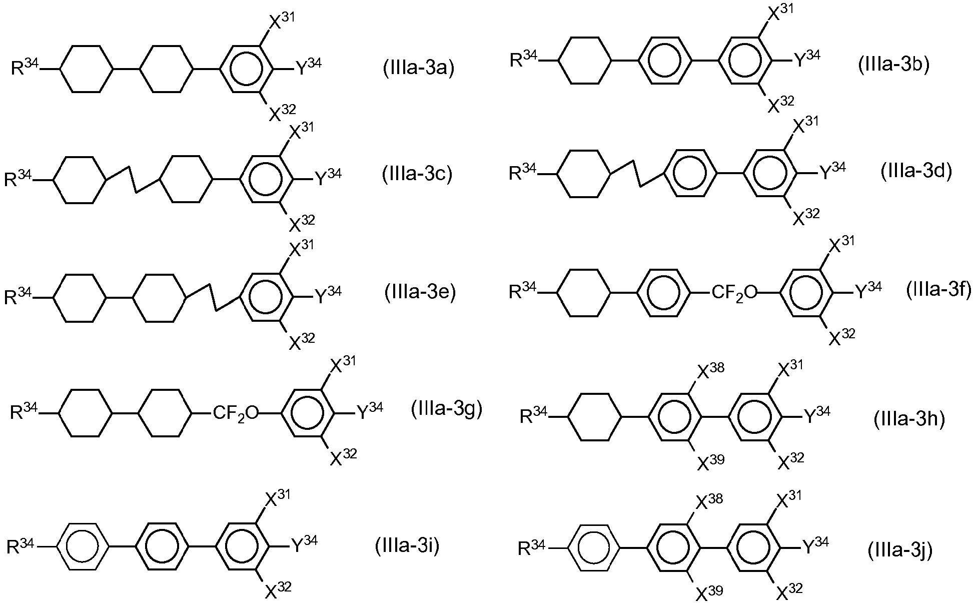

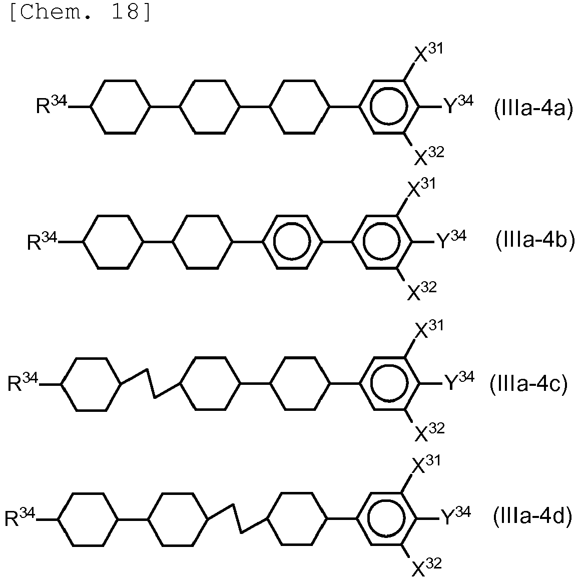

(In the formulae,R³⁴ represents an alkyl group having 1 to 8 carbon atoms, an alkoxy group having 1 to 8 carbon atoms, or an alkenyl group having 2 to 8 carbon atoms, X³¹ and X³² each independently represent a hydrogen atom or a fluorine atom, and Y³¹ represents a cyano group, a fluorine atom, a chlorine atom, a trifluoromethyl group, a fluoromethoxy group, a difluoromethoxy group, or a trifluoromethoxy group.) Structures represented by formulae below are also preferable.

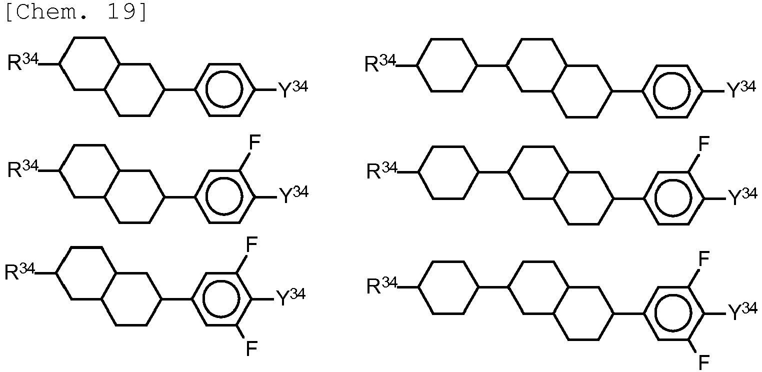

(In the formulae, R³⁴ represents an alkyl group having 1 to 8 carbon atoms, an alkoxy group having 1 to 8 carbon atoms, or an alkenyl group having 2 to 8 carbon atoms, and Y³⁴ represents a cyano group, a fluorine atom, a chlorine atom, a trifluoromethyl group, a fluoromethoxy group, a difluoromethoxy group, or a trifluoromethoxy group.)

With regard to general formula (IIIb), specific structures represented by general formulae below are preferable.

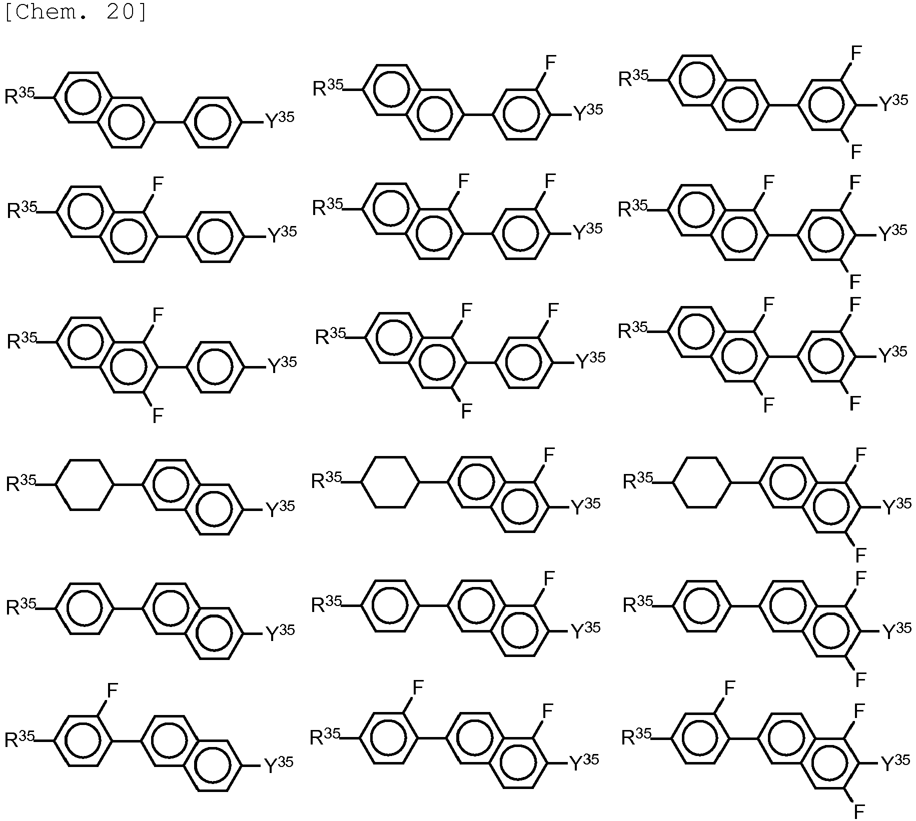

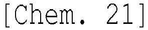

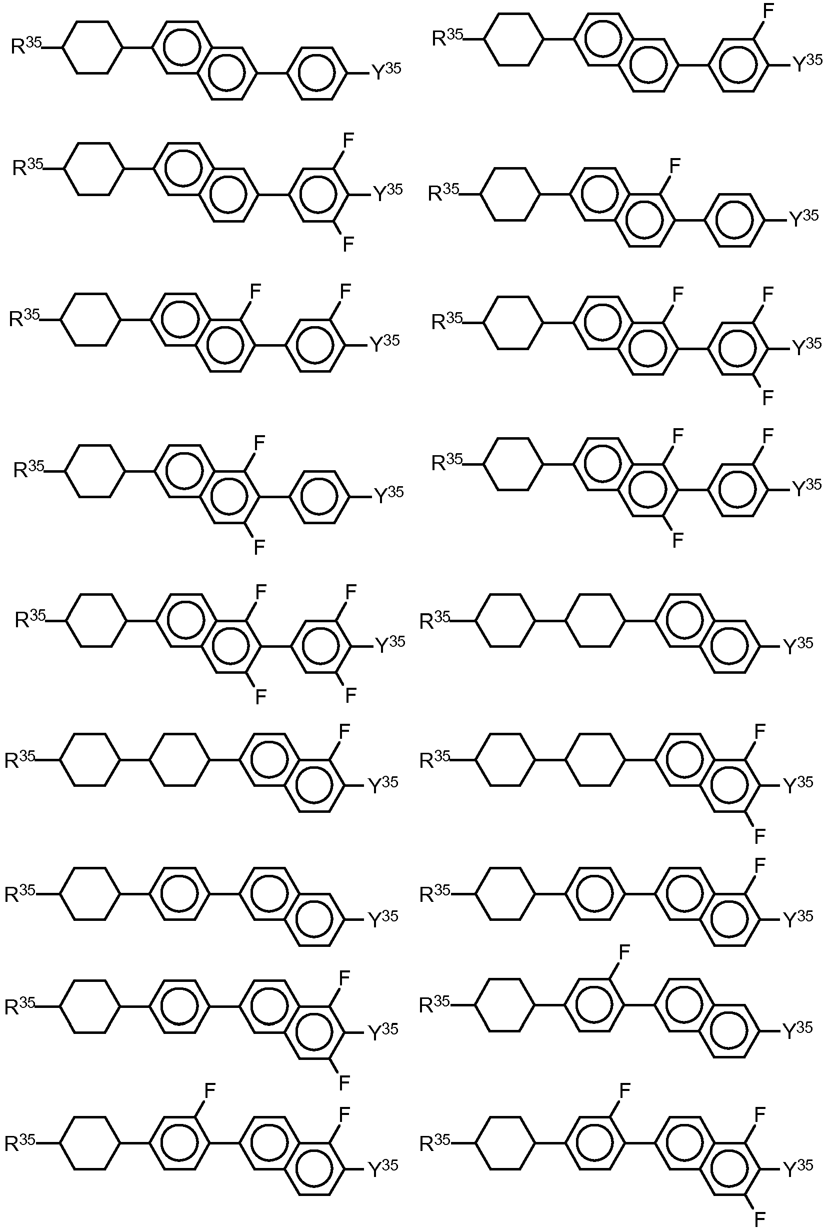

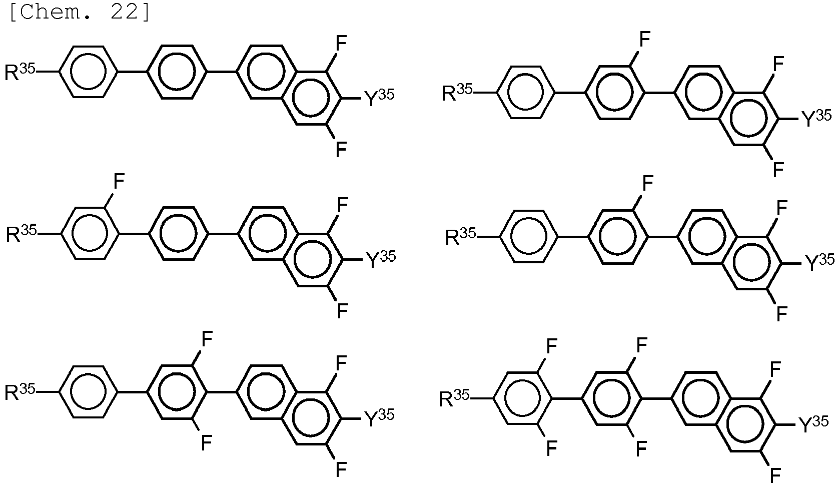

(In the formulae, R³⁵ represents an alkyl group having 1 to 8 carbon atoms, an alkoxy group having 1 to 8 carbon atoms, or an alkenyl group having 2 to 8 carbon atoms, and Y³⁵ represents a cyano group, a fluorine atom, a chlorine atom, a trifluoromethyl group, a fluoromethoxy group, a difluoromethoxy group, or a trifluoromethoxy group.)

With regard togeneral formula (IIIc), specific structures represented by general formulae below are preferable.

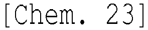

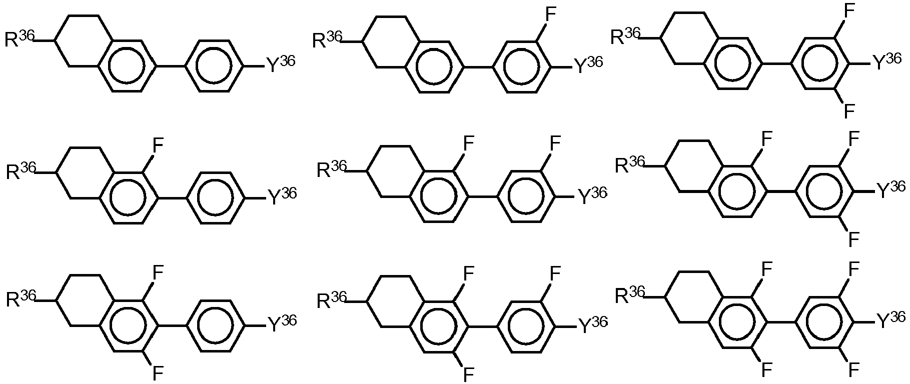

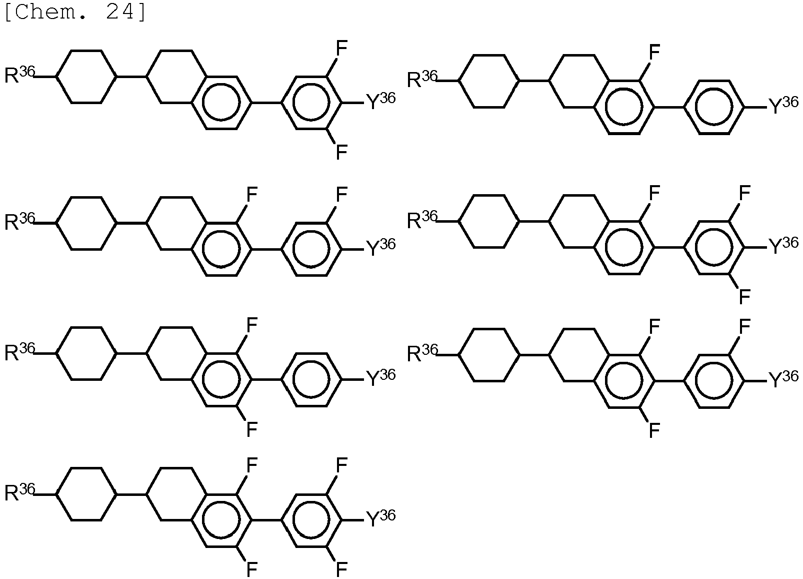

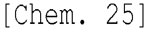

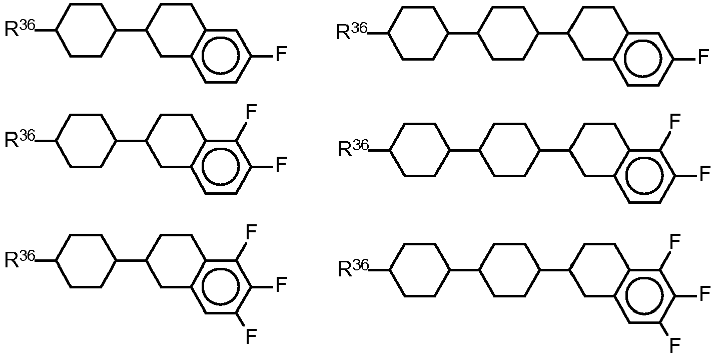

(In the formulae, R³⁶ represents an alkyl group having 1 to 8 carbon atoms, an alkoxy group having 1 to 8 carbon atoms, or an alkenyl group having 2 to 8 carbon atoms, and Y³⁶ represents a cyano group, a fluorine atom, a chlorine atom, a trifluoromethyl group, a fluoromethoxy group, a difluoromethoxy group, or a trifluoromethoxy group.)

The polymerizable liquid crystal compositionmay contain at least one compound selected from the group consisting of the compounds represented by general formulae (IIIa), (IIIb), and (IIIc). The polymerizable liquid crystal compositionpreferablycontains one to ten, and particularly preferablycontains two to eight compounds selected from the group consisting of the compounds represented by general formulae (IIIa), (IIIb), and (IIIc). The lower limit of the content of the at least one compound selected from the group consisting of the compounds represented by general formulae (IIIa), (IIIb), and (IIIc) is preferably 5% by mass, more preferably 10% by mass, and particularly preferably 20% by mass. The upper limit of the content thereof is preferably 80% by mass, more preferably 70% by mass, still more preferably 60% by mass, and particularly preferably 50% by mass.

In the compounds represented by general formulae (IVa), (IVb), and (IVc), R⁴¹, R⁴², R⁴³, R⁴⁴, R⁴⁵, and R⁴⁶ are each independently preferably an alkyl grouphaving 1 to 10 carbon atoms, an alkoxy group having 1 to 10 carbon atoms, an alkenyl group having 2 to 10 carbon atoms, a linear alkyl grouphaving 1 to 15 carbon atoms, or an alkenyloxy group having 2 to 15 carbon atoms, more preferably a linear alkyl grouphaving 1 to 10 carbon atoms, a linear alkoxy group having 1 to 10 carbon atoms, or an alkenyl group having 2 to 10 carbon atoms, and particularly preferably a linear alkyl group having 1 to 8 carbon atoms or an alkoxy group having 1 to 8 carbon atoms. M⁴¹, M⁴², M⁴³, M⁴⁴, M⁴⁵, M⁴⁶, M⁴⁷, M⁴⁸, and M⁴⁹ are each independently preferably a trans-1,4-cyclohexylene group (where one methylene group or two or more non-adjacent methylene groups in the trans-1,4-cyclohexylene group may each be substituted with -O- or -S-), a 1,4-phenylene group (where one -CH= or two or more non-adjacent -CH= in the 1,4-phenylene group may each be substituted with a nitrogen atom), a 1,4-cyclohexenylene group, a 1,4-bicyclo[2.2.2]octylene group, a piperidine-2,5-diyl group, a naphthalene-2,6-diyl group, a 1,2,3,4-tetrahydronaphthalene-2,6-diyl group, ora decahydronaphthalene-2,6-diyl group(where a hydrogen atom contained in any of these groups may be substituted with a cyano group, a fluorine atom, a trifluoromethyl group, a trifluoromethoxy group, or a chlorine atom). A trans-1,4-cyclohexylene group, a 1,4-phenylene group, a 2-fluoro-1,4-phenylene group, a 3-fluoro-1,4-phenylene group or a 2,3-difluoro-1,4-phenylene group is more preferable, a trans-1,4-cyclohexylene group or a 1,4-phenylene group is still more preferable, and a trans-1,4-cyclohexylene group is particularly preferable.L⁴¹, L⁴², L⁴³, L⁴⁴, L⁴⁵, L⁴⁶, L⁴⁷, L⁴⁸, and L⁴⁹ are each independently preferably a single bond,-CH₂CH₂-, -(CH₂)₄-, -OCO-, -COO-, -OCH₂-, -CH₂O-, -OCF₂-, -CF₂O-, or -C=C-. A single bond, -CH₂CH₂-, -OCH₂-, -CH₂O-, -OCF₂-, or -CF₂O- is more preferable. X⁴¹, X⁴², X⁴³, X⁴⁴, X⁴⁵, X⁴⁶, X⁴⁷ and X⁴⁸ each independently represent a hydrogen atom, a trifluoromethyl group, a trifluoromethoxy group, or a fluorine atom. Any one of X⁴¹ and X⁴² represents a fluorine atom, any one of X⁴³, X⁴⁴, and X⁴⁵ represents a fluorine atom, and any one of X⁴⁶, X⁴⁷, and X⁴⁸ represents a fluorine atom. X⁴⁶ and X⁴⁷ do not represent fluorine atoms at the same time. X⁴⁶ and X⁴⁸ do not represent fluorine atoms at the same time.In the compounds represented by general formulae (IVa), (IVb), and (IVc), G represents a methylene group or -O-, u, v, w, x, y, and z each independently represent 0, 1, or 2, and u + v, w + x, and y + z each represent 2 or less.

Specifically, the compound represented by general formula (IVa) preferably represents a structure represented by general formula (IVa-1) below.

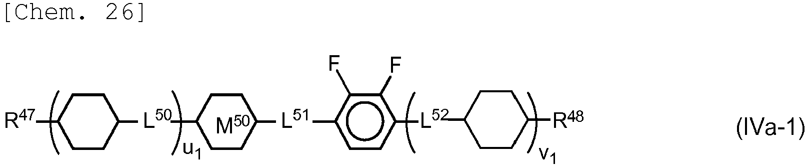

(In the formula, R⁴⁷ and R⁴⁸ each independently represent an alkyl group having 1 to 8 carbon atoms, an alkoxyl group having 1 to 8 carbon atoms, or an alkenyl group having 2 to 8 carbon atoms, L⁵⁰, L⁵¹, and L⁵² each independently represent a single bond, -CH₂CH₂-, -(CH₂)₄-, -OCH₂-, -CH₂O-, -OCF₂-,-CF₂O-, or -C=C-, M⁵⁰ represents a 1,4-phenylene group or a trans-1,4-cyclohexylene group, and u₁ and v₁ each independently represent 0 or 1.

Among the structures formed by the combinations of the above alternatives, -CH=CH-CH=CH-, -C=C-C=C-, and -CH=CH-C=C- are not preferable from the viewpoint of chemical stability. Similarly, structures in which a hydrogen atom in any of these structures is substituted with a fluorine atom are also not preferable. Similarly, structures in which oxygen atoms are bonded to each other, structures in which sulfur atoms are bonded to each other, and structures in which a sulfur atom is bonded to an oxygen atom are also not preferable. Similarly, structures in which nitrogen atoms are bonded to each other, structures in which a nitrogen atom is bonded to an oxygen atom, and structures in which a nitrogen atom is bonded to a sulfur atom are also not preferable.

More specifically, structures represented by general formulae (IVa-2a) to (IVa-3i) below are preferable.

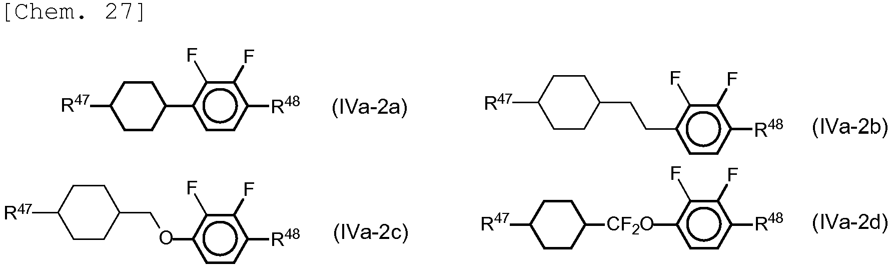

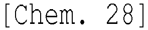

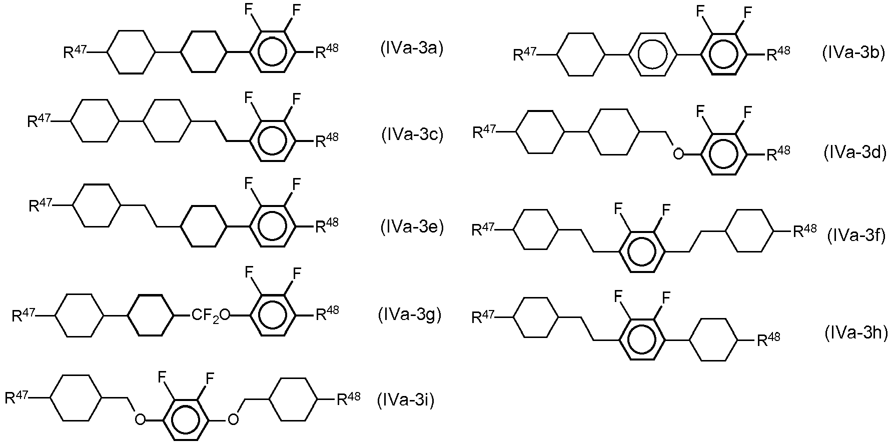

(In the formulae, R⁴⁷ and R⁴⁸ each independently represent an alkyl group having 1 to 8 carbon atoms, an alkoxy group having 1 to 8 carbon atoms, or an alkenyl group having 2 to 8 carbon atoms.) More preferably, R⁴⁷ and R⁴⁸ in the formulae each independently represent an alkyl group having 1 to 8 carbon atoms or an alkoxy group having 1 to 8 carbon atoms.

Specifically, the compound represented by general formula (IVb) preferably represents a structure represented by general formula (IVb-1) below.

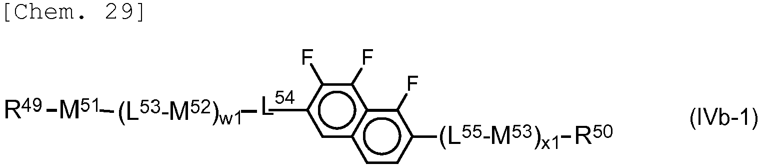

(In the formula, R⁴⁹ and R⁵⁰ each independently represent an alkyl group having 1 to 8 carbon atoms, an alkoxy group having 1 to 8 carbon atoms, or an alkenyl group having 2 to 8 carbon atoms, L⁵², L⁵³, and L⁵⁴ each independently represent a single bond, -CH₂CH₂-, -(CH₂)₄-, -OCH₂-, -CH₂O-, -OCF₂-,-CF₂O-, or -C≡C-, M⁵¹, M⁵², and M⁵³ each represent a 1,4-phenylene group or a trans-1,4-cyclohexylene group, and w1 and x1 each independently represent 0, 1, or 2 and w1 + x1 represents 2 or less.

More specifically, structures represented by general formulae (IVb-2a) to (IVb-31) below are preferable.

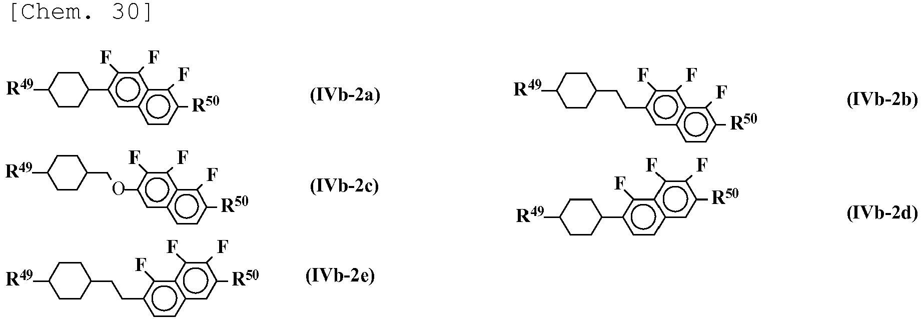

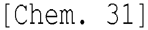

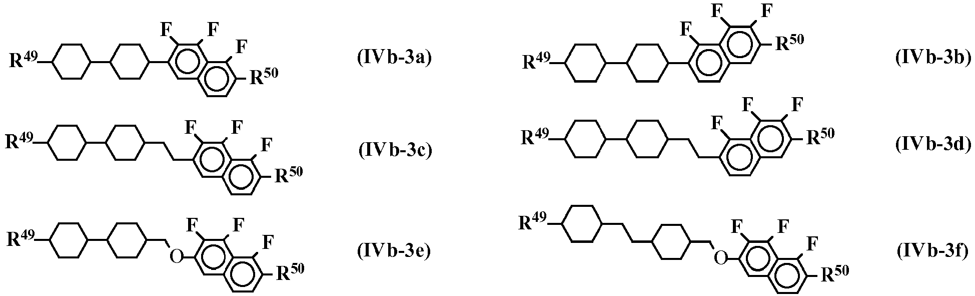

(In the formulae, R⁴⁹ and R⁵⁰ each independently represent an alkyl group having 1 to 8 carbon atoms, an alkoxy group having 1 to 8 carbon atoms, or an alkenyl group having 2 to 8 carbon atoms.)

Specifically, the compound represented by general formula (IVc) preferably represents structures represented by general formulae (IVc-1a) and (IVc-1b) below.

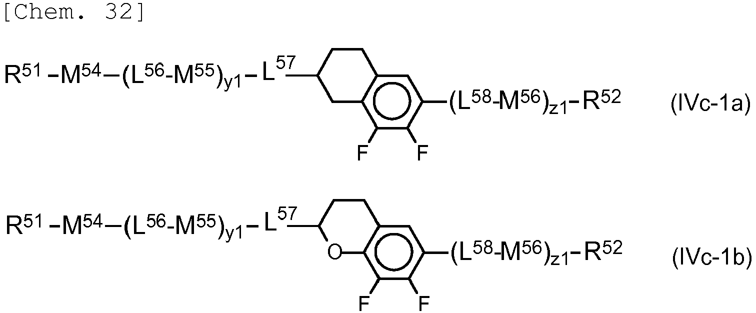

(In the formulae, R⁵¹ and R⁵² each independently represent an alkyl group having 1 to 8 carbon atoms, an alkoxy group having 1 to 8 carbon atoms, or an alkenyl group having 2 to 8 carbon atoms, L⁵⁶, L⁵⁷, and L⁵⁸ each independently represent a single bond, -CH₂CH₂-, -(CH₂)₄-, -OCH₂-, -CH₂O-, -OCF₂-,-CF₂O-, or -C=C-, M⁵⁴, M⁵⁵, and M⁵⁶ each represent a 1,4-phenylene group or a trans-1,4-cyclohexylene group, and y1 and z1 each independently represent 0, 1, or 2 and y1 + z1 represents 2 or less.)

More specifically, structures represented by general formulae (IVc-2a) to (IVc-2g) below are preferable.

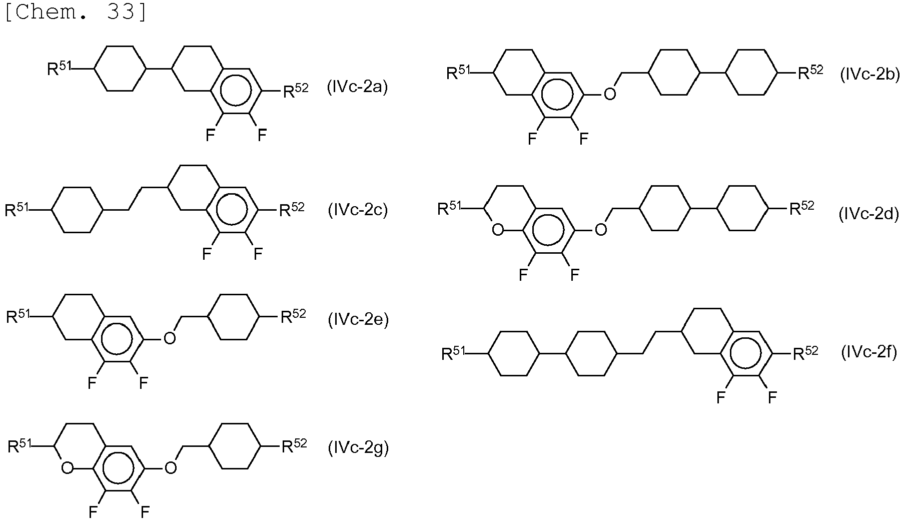

(In the formulae, R⁵¹ and R⁵² each independently represent an alkyl group having 1 to 8 carbon atoms, an alkoxy group having 1 to 8 carbon atoms, or an alkenyl group having 2 to 8 carbon atoms.)

The polymerizable liquid crystal composition contains at least one compound selected from the group consisting of the compounds represented by general formulae (IIIa), (IIIb), and (IIIc) or at least one compound selected from the group consisting of the compounds represented by general formulae (IVa), (IVb), and (IVc). The polymerizableliquid crystal composition contains preferably two to ten, and particularly preferably two to eight compounds selected from the group consisting of the compounds represented by general formulae (IIIa), (IIIb), and (IIIc) or the compounds represented by general formulae (IVa), (IVb), and (IVc). The lower limit of the content of the at least one compound is preferably 5% by mass, more preferably 10% by mass, and particularly preferably 20% by mass. The upper limit of the content thereof is preferably 80% by mass, more preferably 70% by mass, still more preferably 60% by mass, and particularly preferably 50% by mass.

In the polymerizable liquid crystal compositionof the present invention, a birefringence Δn is preferablyin the range of 0.08 to 0.25.

In the polymerizable liquid crystal composition of the present invention, a polymerizable liquid crystal composition having a positive dielectric anisotropy Δε or a negative dielectric anisotropy Δε can be appropriately selected and used depending on the display mode of a liquid crystal display element. In a liquid crystal display element of the twisted nematic (TN) mode or an in-plane switching (IPS) mode, a polymerizableliquid crystal composition having a positive dielectric anisotropy Δεis used. In such a case, the dielectric anisotropy Δε is preferably1 or more, and more preferably 2 or more. In a liquid crystal display element of the multi-domain vertical alignment (MVA) mode, a polymerizableliquid crystal composition having a negative dielectric anisotropy Δε is used. In such a case, the dielectric anisotropy Δε is preferably -1 or less, and more preferably -2 or less.

The polymerizable liquid crystal composition of the present invention has a wide liquid crystal phase temperature range (i.e., the absolute value of the difference between the liquid crystal phase lower limit temperature and the liquid crystal phase upper limit temperature). The liquid crystal phase temperature range is preferably 100°C or more, and more preferably 120°C or more. The liquid crystal phase upper limit temperature is preferably 70°C or higher, and more preferably 80°C or higher. Furthermore, the liquid crystal phase lower limit temperature is preferably -20°C or lower, and more preferably -30°C or lower.

The polymerizableliquid crystal composition of the present invention may contain a commonly used nematic liquid crystal, smectic liquid crystal, cholesteric liquid crystal, or the like besides the compounds described above.

Polymerization of the polymerizable compound-containing liquid crystal composition of the present invention proceeds even in the absence of a polymerization initiator. However, theliquid crystal composition of the present invention may contain a polymerization initiator in order to accelerate polymerization. Examples of the polymerization initiator include benzoin ethers, benzophenones, acetophenones, benzyl ketals, and acylphosphine oxides.

A stabilizer may be added to the liquid crystal composition of the present invention in order to improve the storage stability of the liquid crystal composition. Examples of the stabilizer that can be used include hydroquinones, hydroquinone monoalkyl ethers, tertiary butyl catechols, pyrogallols, thiophenols, nitro compounds, β-naphthylamines, β-naphthols, and nitroso compounds. When the stabilizer is used, the amount of stabilizer added is preferablyin the range of 0.005% to 1% by mass, more preferably 0.02% to 0.5% by mass, and particularly preferably 0.03% to 0.1% by mass relative to the liquid crystal composition.

To the polymerizableliquid crystal composition of the present invention, a liquid crystal alignment capability is provided by polymerization of the polymerizable compounds contained in the liquid crystal composition. The polymerizableliquid crystal composition of the present invention is used in a liquid crystaldisplay element in which the amount of transmitted light is controlled by using the birefringence of the liquid crystal composition. The polymerizableliquid crystal composition of the present invention can be useful for various liquid crystal display elements, such as an active-matrix liquid crystal display element (AM-LCD), a twisted nematic liquid crystal display element (TN-LCD), a super twisted nematic liquid crystal display element (STN-LCD), an optically compensated birefringence liquid crystal display element (OCB-LCD), and an in-plane-switching liquid crystal display element (IPS-LCD). The polymerizableliquid crystal composition of the present invention is particularly useful for an AM-LCD, and can be used in a transmissive or reflective liquid crystaldisplay element.

Two substrates of a liquid crystal cell used in a liquid crystal display element may be composed of glass or a flexible transparent material such as a plastic material. One of the substrates may be composed of an opaque material such as silicon. A transparent substrate having a transparent electrode layer can be produced by, for example, sputtering indium tin oxide (ITO) on a transparent substrate such as a glass plate.

A color filter can be produced by, for example, a pigment dispersion method, a printing method, an electrodeposition method, or a staining method. A method for producing a color filter will be described by taking the pigment dispersion method as an example. First, a curable coloring composition for a color filter is applied onto the above-mentioned transparent substrate, and is then patterned. The curable coloring composition is then cured by heat or light irradiation. These steps are performed for each of three colors of red, green, and blue. Thus, pixel portions for the color filter can be formed. Furthermore, pixel electrodes each including an active element such as a thin-film transistor (TFT), a thin-film diode, or a metal-insulator-metal specific resistance element may be provided on the substrate.

The substrates are arranged so as to face each other such that the transparent electrode layer is disposed inside. In this step, the gap between the substrates may be adjusted by providing a spacer therebetween. In this case, the gap is preferably adjusted so that the thickness of a light-modulating layer obtained is in the range of 1 to 100 µm, and more preferably 1.5 to 10 µm. When a polarizer is used, it is preferable to adjust the product of the birefringence Δn of a liquid crystal and a cell thickness d so that the contrast becomes maximum. When two polarizers are provided, the polarizing axis of each of the polarizers may be adjusted so that a satisfactory angle of view and a satisfactory contrast can be obtained. Furthermore, a retardation film for widening the angle of view may also be used. Examples of the spacer include glass particles, plastic particles, alumina particles, and photoresist materials. Subsequently, a sealant composed of an epoxy thermosetting composition or the like is applied onto the substrate by screen printing so as to form a liquid-crystal injection port. The substrates are then bonded to each other, and the sealant is thermally cured by heating.

As a method for interposing the polymer-stabilized liquid crystal composition between the two substrates, a commonly used vacuum injection method, a one-drop-fill (ODF) method, or the like can be employed.

Regarding a method for polymerizing the polymerizable compounds, since rapid progress of polymerization is desirable,it is preferable to employ a method in which polymerization is conducted by applying an active energy ray such as ultraviolet light or an electron beam. In the case where ultraviolet light is used, either a polarized light source or an unpolarized light source may be used. When polymerization is conducted in a state in which the liquid crystal composition is interposed between two substrates, it is necessary that at least a substrate disposed on the irradiation surface side have transparency appropriate for the active energy ray. Only specific portions may be polymerized by using a mask during light irradiation,the alignment state of unpolymerized potions may then be changed by changing a condition such as the electric field, the magnetic field, or the temperature, and the unpolymerized potions may be polymerized by further applying an active energy ray. In particular, when ultraviolet exposure is performed, the ultraviolet exposure is preferably performed while applying an alternating current to the polymerizable-compound-containing liquid crystalcomposition. With regard to the alternating current applied, a frequency of 10 Hz to 10 kHz is preferable, a frequency of 60 Hz to 10 kHz is more preferable, and the voltage is selected in accordance with a desired pretilt angle of the liquid crystal display element. That is, the pretilt angle of the liquid crystal display element can be controlled by the voltage applied. In a liquid crystal display element of the MVA mode, it is preferable to control the pretilt angle to 80 to 89 degrees from the viewpoint of alignment stability and the contrast.

The temperature during the irradiation is preferably within a temperature range in which the liquid crystal state of the liquid crystal composition of the present invention is maintained. Polymerization is preferably conducted at a temperature close to room temperature, that is, typically at a temperature in the range of 15°C to 35°C. A metal halide lamp, a high-pressure mercury lamp, an ultrahigh-pressure mercury lamp, or the like can be used as a lamp for generating ultraviolet light. With regard to the wavelength of ultraviolet light radiated, it is preferable to radiate ultraviolet light in a wavelength range which is not included in an absorption wavelength range of the liquid crystal composition. Preferably, a certain wavelength range of ultraviolet light is cut off and used, as required. The intensity of ultraviolet light radiated is preferably 0.1 mW/cm² to 100 W/cm², and more preferably 2 mW/cm² to 50 W/cm². The amount of energy of the ultraviolet light radiated can be appropriately adjusted, but is preferably 1 mJ/cm² to 500 J/cm², and more preferably 100 mJ/cm² to 200 J/cm². During the irradiation of ultraviolet light, the intensity of the ultraviolet light may be changed. The ultraviolet-irradiation time is appropriately selected in accordance with the intensity of the ultraviolet light radiated, but is preferably 10 to 3,600 seconds.

### EXAMPLES

The present invention will be described in more detail usingExamples, but the present invention is not limited to these Examples. It should be noted that "%" in compositions of Examples and Comparative Examplesdescribed below represents "% by mass".

Physical properties of liquid crystal compositions are represented as follows.
T_{N-I} (°C): Nematic phase-isotropic liquid phase transition temperature (liquid crystal phase upper limit temperature)
Δε: Dielectric anisotropy
Δn: Birefringence

### (Method for measuring amount of residual monomer after UV curing)

A liquid crystal composition was injected into a liquid crystal cell, and the cell was then irradiated with ultraviolet (UV) light to polymerize polymerizable compounds. Subsequently, the liquid crystal cell was disassembled, and an acetonitrile solution of an elution component containing a liquid crystal material, a polymerized product, and unpolymerized polymerizable compounds was prepared. This solution was analyzed by high-performance liquid chromatography (column: reversed-phase nonpolar column, developing solvent: acetonitrile) to measure the peak areas of respective components. The amount of residual polymerizable compounds was determined from the ratio of the peak area of the unpolymerized polymerizable compounds to the peak area of theliquid crystal material used as an indicator. The amount of residual monomers was determined from this value and the amount of polymerizable compounds initially added. The detection limit of the amount of residual polymerizable compounds was 100 ppm.

### (Example 1)

A liquid crystal composition LC-1 containing at least one compound selected from the compounds represented by general formula (I) and at least one compound selected from the compounds represented by general formulae (IIIa), (IIIb), and (IIIc) or at least one compound selected from the compounds represented by general formulae (IVa), (IVb), and (IVc) was prepared. The compounds contained in the liquid crystal composition LC-1 and the proportions of the compounds are as follows.

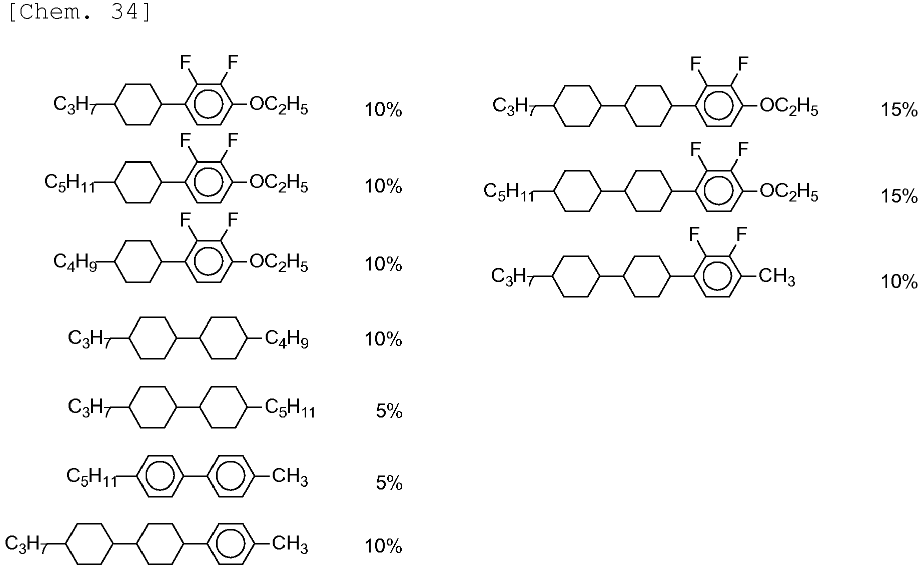

Table 1 shows the physical properties of the liquid crystal composition LC-1.

**[Table 1]**

| | |
|---|---|
| T_{N-I} (°C) | 80.0 |
| Δ*ε* | -3.5 |
| Δn | 0.087 |

A polymerizableliquid crystal composition CLC-1 was prepared by adding 0.3% of a polymerizable compound represented by 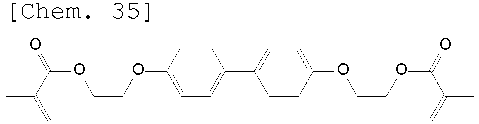 and 0.1% of a polymerizable compound represented by

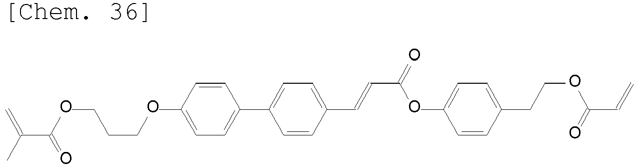

to 99.6% of the liquid crystal composition LC-1 and uniformly dissolving the polymerizable compounds.

### (Comparative Example 1)

A polymerizableliquid crystal composition CLC-2 was prepared by adding 0.4% of the polymerizable compound represented by 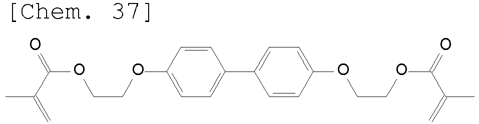 to 99.6% of the liquid crystal composition LC-1 and uniformly dissolving the polymerizable compound.

### (Comparative Example 2)

A polymerizableliquid crystal composition CLC-3 was prepared by adding 0.4% of the polymerizable compound represented by 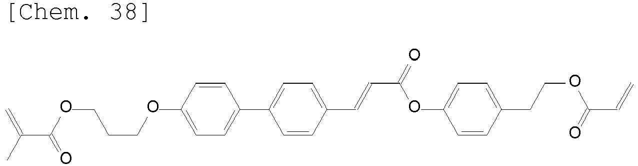 to 99.6% of the liquid crystal composition LC-1 and uniformly dissolving the polymerizable compound.

### (Example 2)

A polymerizableliquid crystal composition CLC-4 was prepared by adding 0.3% of a polymerizable compound represented by 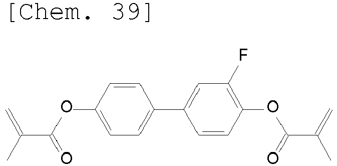 and 0.1% of a polymerizable compound represented by 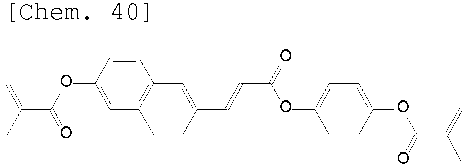 to 99.6% of the liquid crystal composition LC-1 and uniformly dissolving the polymerizable compounds.

### (Comparative Example 3)

A polymerizableliquid crystal composition CLC-5 was prepared by adding 0.4% of thepolymerizable compound represented by 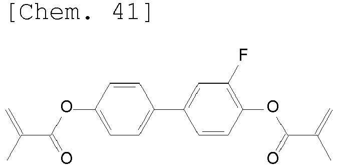 to 99.6% of the liquid crystal composition LC-1 and uniformly dissolving the polymerizable compound.

### (Comparative Example 4)

A polymerizableliquid crystal composition CLC-6 was prepared by adding 0.4% of thepolymerizable compound represented by 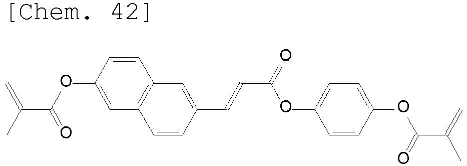 to 99.6% of the liquid crystal composition LC-1 and uniformly dissolving the polymerizable compound.

The polymerizable liquid crystal compositions prepared in Example 1, Example 2, and Comparative Examples 1 to 4 were injected, by a vacuum injection method, into cells with ITO, the cells each having a cell gap of 3.5 µm and including polyimide alignment layers that induce a homeotropic alignment. After the injection, each of the liquid crystal cells was irradiated with ultraviolet light using a high-pressure mercury lamphaving a peak wavelength in the range of 300 to 400 nm while applying a voltage.Thus, homeotropic-alignment liquid crystal display elements in which the polymerizable compounds in the polymerizableliquid crystal compositions were polymerized were obtained.For the liquid crystal display elements, the measurement of the pretilt angle, which affects display characteristics (such as the contrast and the response speed), and visual observation of image stickingwere conducted. (With regard to the pretilt angle, "A" represents that the change in the pretilt angle is in the range of about 87° to 89°, and "B" represents that the pretilt angle is not changed or the change in the pretilt angle is greater than 87°. With regard to image sticking, "A" represents that a change due to image sticking is not observed, and "B" represents that the display characteristics are not good or image sticking is observed. The number of "Bs" represents that the larger the number of "Bs", the worsethe degree.)

**[Table 2]**

| | Example 1 | Comparative Example 1 | Comparative Example 2 | Example 2 | Comparative Example 3 | Comparative Example 4 |
|---|---|---|---|---|---|---|
| Pretilt angle | A | A | B | A | AA | B |
| Image sticking | A | BB | A | A | B | A |

According to the above results, it was confirmed that, by using compounds of the present invention, the change in the pretilt angle was made optimum and the occurrence of image sticking was prevented.

### (Example 3)

A liquid crystal composition LC-2 containing at least one compound selected from the compounds represented by general formula (I) and at least one compound selected from the compounds represented by general formulae (IIIa), (IIIb), and (IIIc) or at least one compound selected from the compounds represented by general formulae (IVa), (IVb), and (IVc) was prepared. The compounds contained in the liquid crystal composition LC-2 and the proportions of the compounds are as follows.

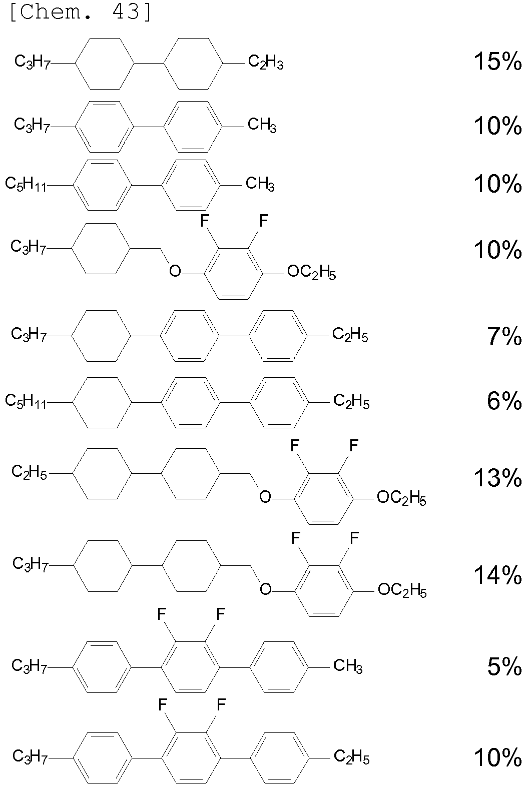

Table 2 shows the physical properties of the liquid crystal composition LC-2.

**[Table 3]**

| | |
|---|---|
| T_{N-I} (°C) | 75.3 |
| Δ*ε* | -2.7 |
| Δn | 0.134 |

A polymerizableliquid crystal composition CLC-7 was prepared by adding 0.2% of a polymerizable compound represented by 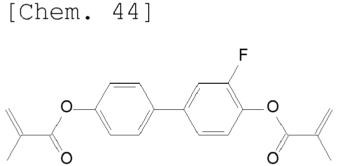 and 0.1% of a polymerizable compound represented by 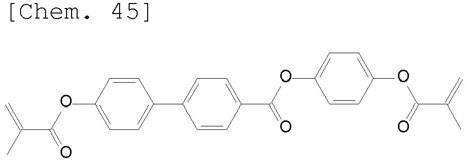 to 99.7% of the liquid crystal composition LC-2 and uniformly dissolving the polymerizable compounds.

### (Comparative Example 5)

A polymerizableliquid crystal composition CLC-8 was prepared by adding 0.3% of thepolymerizable compound represented by 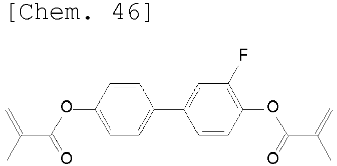 to 99.7% of the liquid crystal composition LC-2 and uniformly dissolving the polymerizable compound.

### (Comparative Example 6)

A polymerizableliquid crystal composition CLC-9 was prepared by adding 0.3% of thepolymerizable compound represented by 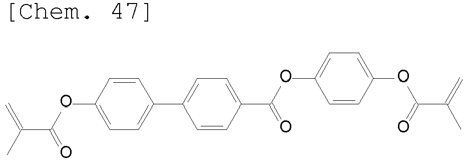 to 99.7% of the liquid crystal composition LC-2 and uniformly dissolving the polymerizable compound.

### (Example 4)

A polymerizableliquid crystal composition CLC-10 was prepared by adding 0.2% of a polymerizable compound represented by 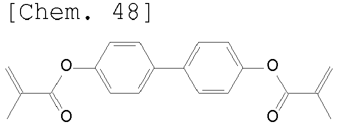 and 0.1% of a polymerizable compound represented by 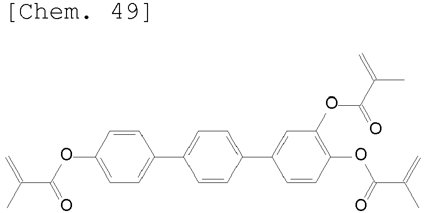 to 99.7% of the liquid crystal composition LC-2 and uniformly dissolving the polymerizable compounds.

### (Comparative Example 7)

A polymerizableliquid crystal composition CLC-11 was prepared by adding 0.3% of thepolymerizable compound represented by 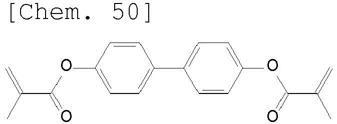 to 99.7% of the liquid crystal composition LC-2 and uniformly dissolving the polymerizable compound.

### (Comparative Example 8)

A polymerizableliquid crystal composition CLC-12 was prepared by adding 0.3% of thepolymerizable compound represented by 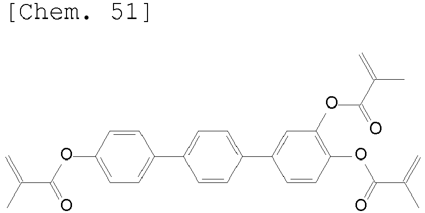 to 99.7% of the liquid crystal composition LC-2 and uniformly dissolving the polymerizable compound.

The polymerizable liquid crystal compositions prepared in Example 3, Example 4, and Comparative Examples 5 to 8 were injected, by a vacuum injection method, into cells with ITO, the cells each having a cell gap of 3.5 µm and including polyimide alignment layers that induce a homeotropic alignment. After the injection, each of the liquid crystal cells was irradiated with ultraviolet light using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. For the liquid crystal display elements, the measurement of the pretilt angle, which affects display characteristics (such as the contrast and the response speed), and visual observation of image sticking were conducted. (With regard to the pretilt angle, "A" represents that the change in the pretilt angle is in the range of about 87° to 89°, and "B" represents that the pretilt angle is not changed or the change in the pretilt angle is greater than 87°. With regard to image sticking, "A" represents that a change due to image sticking is not observed, and "B" represents that the display characteristics are not good or image sticking is observed. The number of "Bs" represents that the larger the number of "Bs", the worse the degree.)

**[Table 4]**

| | Example 3 | Comparative Example 5 | Comparative Example 6 | Example 4 | Comparative Example 7 | Comparative Example 8 |
|---|---|---|---|---|---|---|
| Pretilt angle | A | AA | B | A | A | B |
| Image sticking | A | B | A | A | B | A |

According to the above results, it was confirmed that, by using compounds of the present invention, the change in the pretilt angle was made optimum and the occurrence of image sticking was prevented.

### (Example 5)

A liquid crystal composition LC-3 containing at least one compound selected from the compounds represented by general formula (I) and at least one compound selected from the compounds represented by general formulae (IIIa), (IIIb), and (IIIc) or at least one compound selected from the compounds represented by general formulae (IVa), (IVb), and (IVc) was prepared. The compounds contained in the liquid crystal composition LC-3 and the proportions of the compounds are as follows.

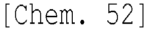

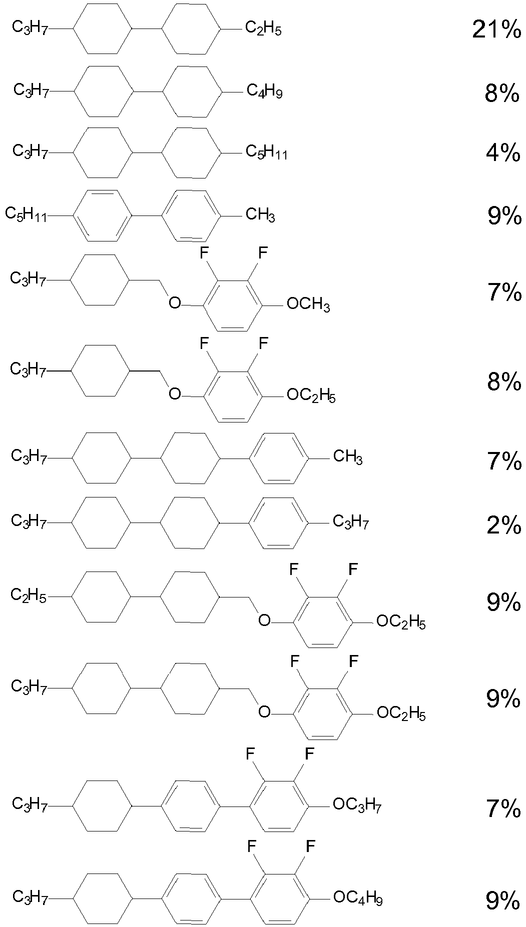

Table 5 shows the physical properties of the liquid crystal composition LC-3.

**[Table 5]**

| | |
|---|---|
| T_{N-I} (°C) | 75.8 |
| Δ*ε* | -3.0 |
| Δn | 0.090 |

A polymerizableliquid crystal composition CLC-13was prepared by adding 0.15% of a polymerizable compound represented by 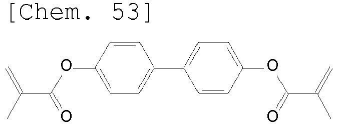 and 0.15% of a polymerizable compound represented by 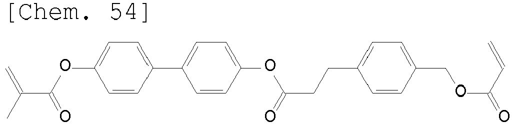 to 99.7% of the liquid crystal composition LC-3 and uniformly dissolving the polymerizable compounds.

### (Comparative Example 9)

A polymerizableliquid crystal composition CLC-14 was prepared by adding 0.3% of thepolymerizable compound represented by 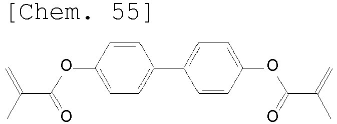 to 99.7% of the liquid crystal composition LC-3 and uniformly dissolving the polymerizable compound.

### (Comparative Example 10)

A polymerizableliquid crystal composition CLC-15 was prepared by adding 0.3% of thepolymerizable compound represented by 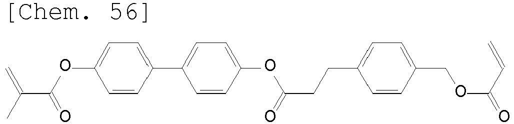 to 99.7% of the liquid crystal composition LC-3 and uniformly dissolving the polymerizable compound.

### (Example 6)

A polymerizableliquid crystal composition CLC-16 was prepared by adding 0.2% of a polymerizable compound represented by 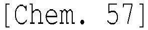 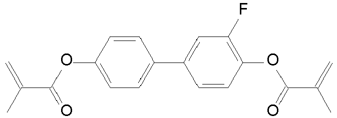 and 0.1% of a polymerizable compound represented by 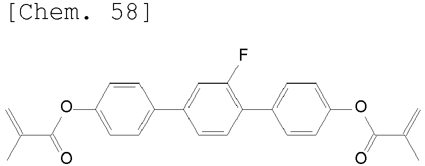 to 99.7% of the liquid crystal composition LC-3 and uniformly dissolving the polymerizable compounds.

### (Comparative Example 11)

A polymerizableliquid crystal composition CLC-17 was prepared by adding 0.3% of the polymerizable compound represented by 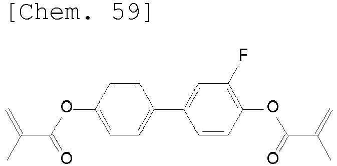 to 99.7% of the liquid crystal composition LC-3 and uniformly dissolving the polymerizable compound.

### (Comparative Example 12)

A polymerizableliquid crystal composition CLC-18 was prepared by adding 0.3% of the polymerizable compound represented by 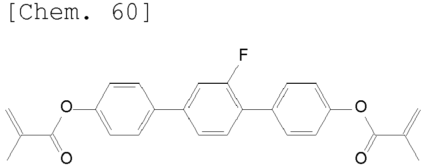 to 99.7% of the liquid crystal composition LC-3 and uniformly dissolving the polymerizable compound.

The polymerizable liquid crystal compositions prepared in Example 5, Example 6, and Comparative Examples 9 to 12 were injected, by a vacuum injection method, into cells with ITO, the cells each having a cell gap of 3.5 µm and including polyimide alignment layers that induce a homeotropic alignment. After the injection, each of the liquid crystal cells was irradiated with ultraviolet light using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. For the liquid crystal display elements, the measurement of the pretilt angle, which affects display characteristics (such as the contrast and the response speed), and visual observation of image sticking were conducted. (With regard to the pretilt angle, "A" represents that the change in the pretilt angle is in the range of about 87° to 89°, and "B" represents that the pretilt angle is not changed or the change in the pretilt angle is greater than 87°. With regard to image sticking, "A" represents that a change due to image sticking is not observed, and "B" represents that the display characteristics are not good or image sticking is observed. The number of "Bs" represents that the larger the number of "Bs", the worse the degree.)

**[Table 6]**

| | Example 5 | Comparative Example 9 | Comparative Example 10 | Example 6 | Comparative Example 11 | Comparative Example 12 |
|---|---|---|---|---|---|---|
| Pretilt angle | A | A | B | AA | AA | B |
| Image sticking | A | B | A | A | B | A |

According to the above results, it was confirmed that, by using compounds of the present invention, the change in the pretilt angle was made optimum and the occurrence of image sticking was prevented.

### (Example 7)

A liquid crystal composition LC-4 containing at least one compound selected from the compounds represented by general formula (I) and at least one compound selected from the compounds represented by general formulae (IIIa), (IIIb), and (IIIc) or at least one compound selected from the compounds represented by general formulae (IVa), (IVb), and (IVc) was prepared. The compounds contained in the liquid crystal composition LC-4 and the proportions of the compounds are as follows.

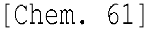

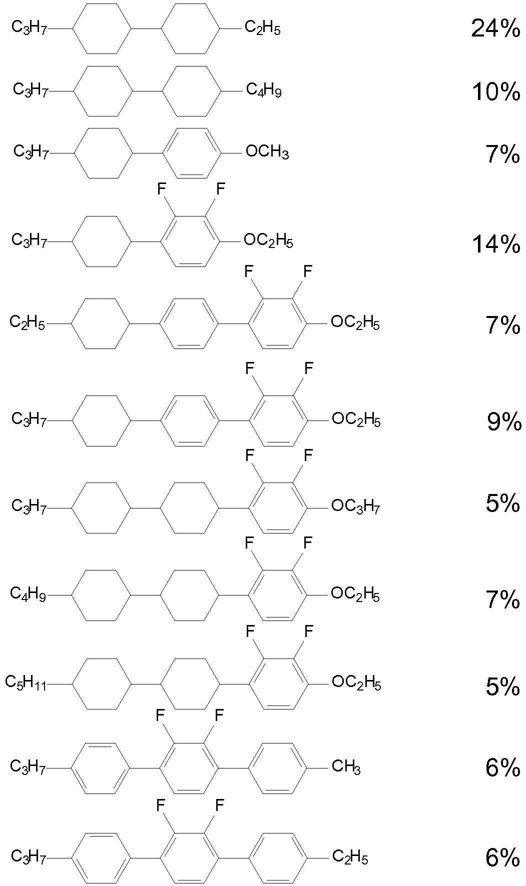

Table 7 shows the physical properties of the liquid crystal composition LC-4.

**[Table 7]**

| | |
|---|---|
| T_{N-I} (°C) | 76.0 |
| Δ*ε* | -2.9 |
| Δn | 0.103 |

A polymerizableliquid crystal composition CLC-19 was prepared by adding 0.2% of a polymerizable compound represented by 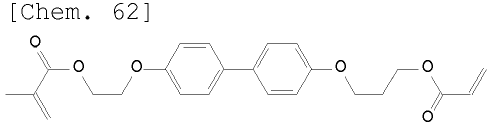 and 0.2% of a polymerizable compound represented by 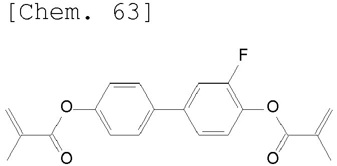 to 99.6% of the liquid crystal composition LC-4 and uniformly dissolving the polymerizable compounds.

### (Comparative Example 13)

A polymerizableliquid crystal composition CLC-20 was prepared by adding 0.4% of the polymerizable compound represented by 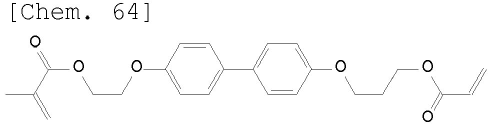 to 99.6% of the liquid crystal composition LC-4 and uniformly dissolving the polymerizable compound.

### (Comparative Example 14)

A polymerizableliquid crystal composition CLC-21 was prepared by adding 0.4% of the polymerizable compound represented by 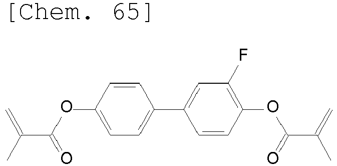 to 99.6% of the liquid crystal composition LC-4 and uniformly dissolving the polymerizable compound.

### (Example 8)

A polymerizableliquid crystal composition CLC-22 was prepared by adding 0.35% of a polymerizable compound represented by 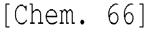 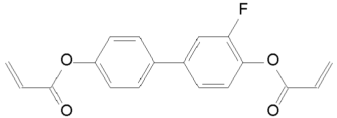 and 0.05% of a polymerizable compound represented by 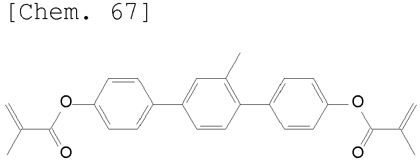 to 99.6% of the liquid crystal composition LC-4 and uniformly dissolving the polymerizable compounds.

### (Comparative Example 15)

A polymerizableliquid crystal composition CLC-23 was prepared by adding 0.4% of the polymerizable compound represented by 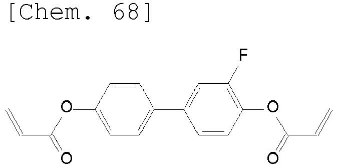 to 99.6% of the liquid crystal composition LC-4 and uniformly dissolving the polymerizable compound.

### (Comparative Example 16)

A polymerizableliquid crystal composition CLC-24 was prepared by adding 0.4% of the polymerizable compound represented by 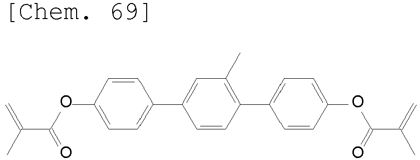 to 99.6% of the liquid crystal composition LC-4 and uniformly dissolving the polymerizable compound.

### (Example 9)

A polymerizableliquid crystal composition CLC-25 was prepared by adding 0.35% of a polymerizable compound represented by 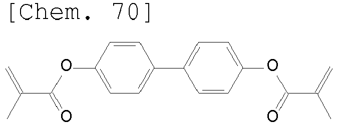 and 0.05% of a polymerizable compound represented by 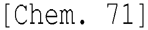 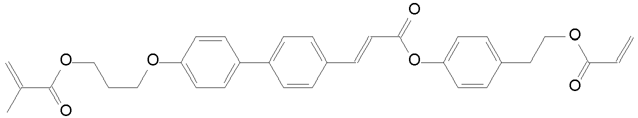 to 99.6% of the liquid crystal composition LC-4 and uniformly dissolving the polymerizable compounds.

### (Comparative Example 17)

A polymerizableliquid crystal composition CLC-26 was prepared by adding 0.4% of the polymerizable compound represented by 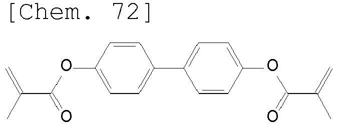 to 99.6% of the liquid crystal composition LC-4 and uniformly dissolving the polymerizable compound.

### (Comparative Example 18)

A polymerizableliquid crystal composition CLC-27 was prepared by adding 0.4% of the polymerizable compound represented by 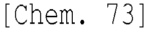 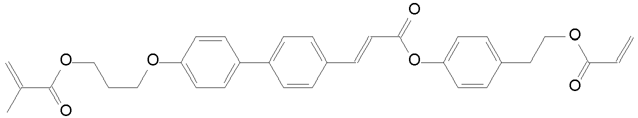 to 99.6% of the liquid crystal composition LC-4 and uniformly dissolving the polymerizable compound.

The polymerizable liquid crystal compositions prepared in Example 7, Example 8, Example 9, and Comparative Examples 13 to 18 were injected, by a vacuum injection method, into cells with ITO, the cells each having a cell gap of 3.5 µm and including polyimide alignment layers that induce a homeotropic alignment. After the injection, each of the liquid crystal cells was irradiated with ultraviolet light using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. For the liquid crystal display elements, the measurement of the pretilt angle, which affects display characteristics (such as the contrast and the response speed), and visual observation of image sticking were conducted. (With regard to the pretilt angle, "A" represents that the change in the pretilt angle is in the range of about 87° to 89°, and "B" represents that the pretilt angle is not changed or the change in the pretilt angle is greater than 87°. With regard to image sticking, "A" represents that a change due to image sticking is not observed, and "B" represents that the display characteristics are not good or image sticking is observed. The number of "Bs" represents that the larger the number of "Bs", the worse the degree.)

**[Table 8]**

| | Example 7 | Comparative Example 13 | Comparative Example 14 | Example 8 | Comparative Example 15 | Comparative Example 16 | Example 9 | Comparative Example 17 | Comparative Example 18 |
|---|---|---|---|---|---|---|---|---|---|
| Pretilt angle | A | A | B | AA | AA | B | A | A | B |
| Image sticking | A | B | A | A | B | A | A | B | A |

According to the above results, it was confirmed that, by using compounds of the present invention, the change in the pretilt angle was made optimum and the occurrence of image sticking was prevented.

### (Example 10)

A liquid crystal composition LC-5 containing at least one compound selected from the compounds represented by general formula (I) and at least one compound selected from the compounds represented by general formulae (IIIa), (IIIb), and (IIIc) or at least one compound selected from the compounds represented by general formulae (IVa), (IVb), and (IVc) was prepared. The compounds contained in the liquid crystal composition LC-5 and the proportions of the compounds are as follows.

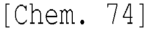

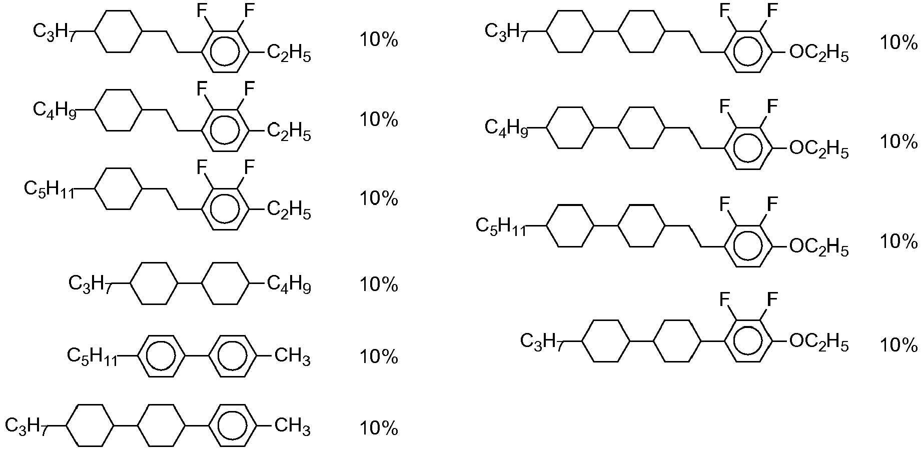

Table 9 shows the physical properties of the liquid crystal composition LC-5.

**[Table 9]**

| | |
|---|---|
| T_{N-I} (°C) | 85.0 |
| Δ*ε* | -3.4 |
| Δn | 0.094 |

A polymerizableliquid crystal composition CLC-28 was prepared by adding 0.25% of a polymerizable compound represented by 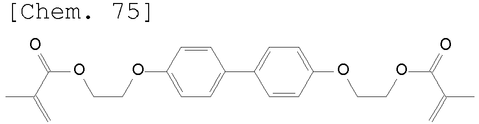 and 0.05% of a polymerizable compound represented by 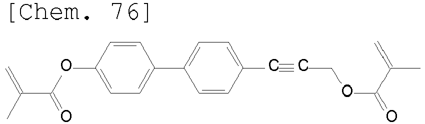 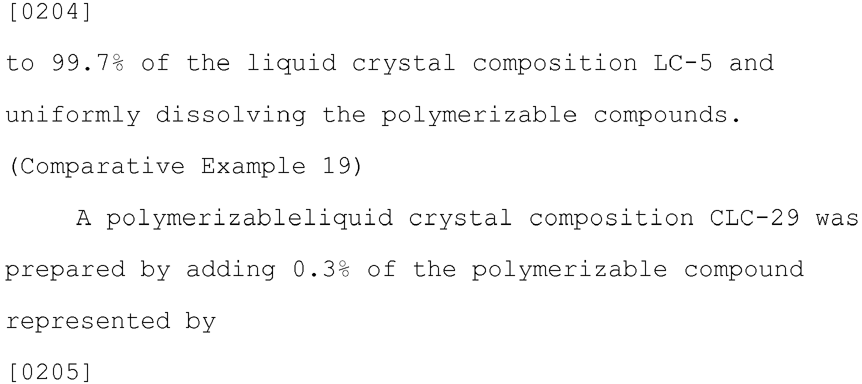 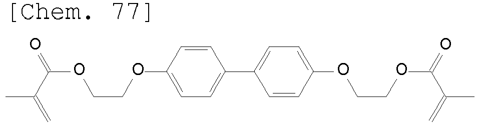 to 99.7% of the liquid crystal composition LC-5 and uniformly dissolving the polymerizable compound.

### (Comparative Example 20)

A polymerizableliquid crystal composition CLC-30 was prepared by adding 0.3% of the polymerizable compound represented by 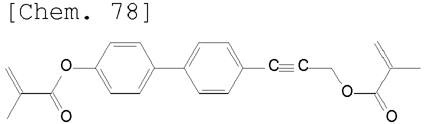 to 99.7% of the liquid crystal composition LC-5 and uniformly dissolving the polymerizable compound.

### (Example 11)

A polymerizableliquid crystal composition CLC-31 was prepared by adding 0.25% of a polymerizable compound represented by 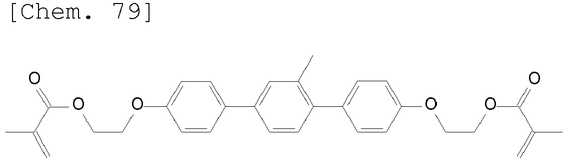 and 0.05% of a polymerizable compound represented by 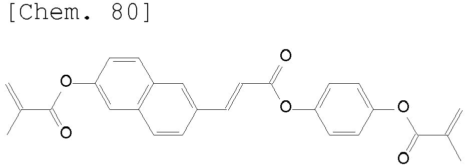 to 99.7% of the liquid crystal composition LC-5 and uniformly dissolving the polymerizable compounds.

### (Comparative Example 21)

A polymerizableliquid crystal composition CLC-32 was prepared by adding 0.3% of the polymerizable compound represented by 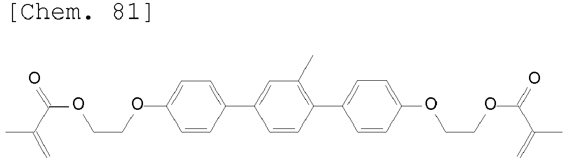 to 99.7% of the liquid crystal composition LC-5 and uniformly dissolving the polymerizable compound.

### (Comparative Example 22)

A polymerizableliquid crystal composition CLC-33 was prepared by adding 0.3% of the polymerizable compound represented by 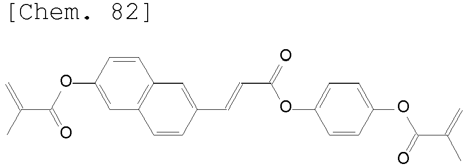 to 99.7% of the liquid crystal composition LC-5 and uniformly dissolving the polymerizable compound.

The polymerizable liquid crystal compositions prepared in Example 10, Example 11, and Comparative Examples 19 to 22 were injected, by a vacuum injection method, into cells with ITO, the cells each having a cell gap of 3.5 µm and including polyimide alignment layers that induce a homeotropic alignment. After the injection, each of the liquid crystal cells was irradiated with ultraviolet light using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. For the liquid crystal display elements, the measurement of the pretilt angle, which affects display characteristics (such as the contrast and the response speed), and visual observation of image sticking were conducted. (With regard to the pretilt angle, "A" represents that the change in the pretilt angle is in the range of about 87° to 89°, and "B" represents that the pretilt angle is not changed or the change in the pretilt angle is greater than 87°. With regard to image sticking, "A" represents that a change due to image sticking is not observed, and "B" represents that the display characteristics are not good or image sticking is observed. The number of "Bs" represents that the larger the number of "Bs", the worse the degree.)

**[Table 10]**

| | Example 10 | Comparative Example 19 | Comparative Example 20 | Example 11 | Comparative Example 21 | Comparative Example 22 |
|---|---|---|---|---|---|---|
| Pretilt angle | A | A | B | A | A | B |
| Image sticking | A | B | A | A | B | A |

According to the above results, it was confirmed that, by using compounds of the present invention, the change in the pretilt angle was made optimum and the occurrence of image sticking was prevented.

### (Example 12)

A liquid crystal composition LC-6 containing at least one compound selected from the compounds represented by general formula (I) and at least one compound selected from the compounds represented by general formulae (IIIa), (IIIb), and (IIIc) or at least one compound selected from the compounds represented by general formulae (IVa), (IVb), and (IVc) was prepared. The compounds contained in the liquid crystal composition LC-6 and the proportions of the compounds are as follows.

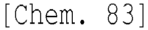

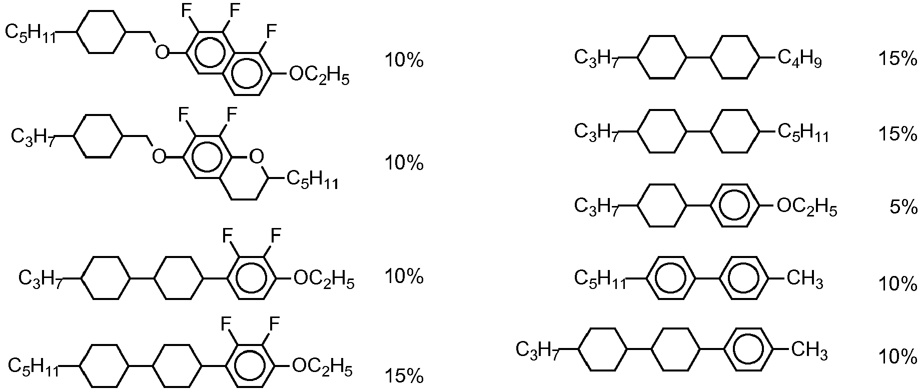

Table 11 shows the physical properties of the liquid crystal composition LC-6.

**[Table 11]**

| | |
|---|---|
| T_{N-I} (°C) | 72.0 |
| Δ*ε* | -3.3 |
| Δn | 0.086 |

A polymerizableliquid crystal composition CLC-34 was prepared by adding 0.2% of a polymerizable compound represented by 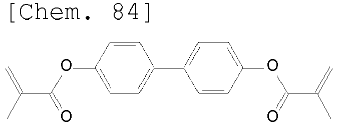 and 0.2% of a polymerizable compound represented by
to 99.6% of the liquid crystal composition LC-6 and uniformly dissolving the polymerizable compounds.

### (Comparative Example 23)

A polymerizableliquid crystal composition CLC-35 was prepared by adding 0.4% of the polymerizable compound represented by 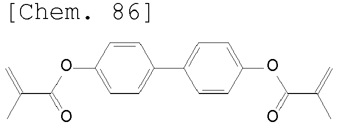 to 99.6% of the liquid crystal composition LC-6 and uniformly dissolving the polymerizable compound.

### (Comparative Example 24)

A polymerizableliquid crystal composition CLC-36 was prepared by adding 0.4% of the polymerizable compound represented by 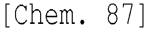 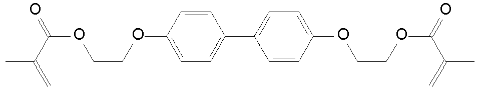 to 99.6% of the liquid crystal composition LC-6 and uniformly dissolving the polymerizable compound.

### (Example 13)

A polymerizableliquid crystal composition CLC-37 was prepared by adding 0.15% of a polymerizable compound represented by 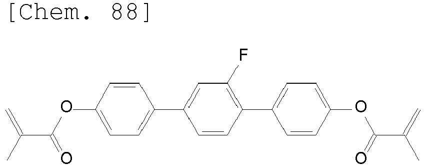 and 0.15% of a polymerizable compound represented by 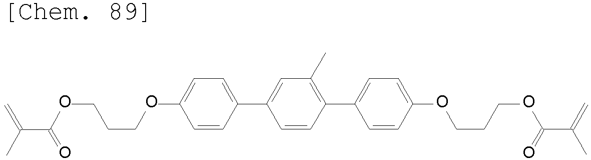 to 99.7% of the liquid crystal composition LC-6 and uniformly dissolving the polymerizable compounds.

### (Comparative Example 25)

A polymerizableliquid crystal composition CLC-38 was prepared by adding 0.3% of the polymerizable compound represented by 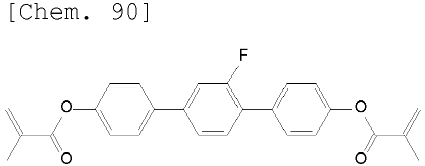 to 99.7% of the liquid crystal composition LC-6 and uniformly dissolving the polymerizable compound.

### (Comparative Example 26)

A polymerizableliquid crystal composition CLC-39 was prepared by adding 0.3% of the polymerizable compound represented by 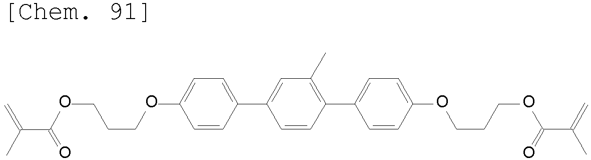 to 99.7% of the liquid crystal composition LC-6 and uniformly dissolving the polymerizable compound.

The polymerizable liquid crystal compositions prepared in Example 12, Example 13, and Comparative Examples 23 to 26were injected, by a vacuum injection method, into cells with ITO, the cells each having a cell gap of 3.5 µm and including polyimide alignment layers that induce a homeotropic alignment. After the injection, each of the liquid crystal cells was irradiated with ultraviolet light using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. For the liquid crystal display elements, the measurement of the pretilt angle, which affects display characteristics (such as the contrast and the response speed), and visual observation of image sticking were conducted. (With regard to the pretilt angle, "A" represents that the change in the pretilt angle is in the range of about 87° to 89°, and "B" represents that the pretilt angle is not changed or the change in the pretilt angle is greater than 87°. With regard to image sticking, "A" represents that a change due to image sticking is not observed, and "B" represents that the display characteristics are not good or image sticking is observed. The number of "Bs" represents that the larger the number of "Bs", the worse the degree.)

**[Table 12]**

| | Example 12 | Comparative Example 23 | Comparative Example 24 | Example 13 | Comparative Example 25 | Comparative Example 26 |
|---|---|---|---|---|---|---|
| Pretilt angle | A | A | B | A | A | B |
| Image sticking | A | B | A | A | B | A |

According to the above results, it was confirmed that, by using compounds of the present invention, the change in the pretilt angle was made optimum and the occurrence of image sticking was prevented.

### (Example 14)

A liquid crystal composition LC-7 containing at least one compound selected from the compounds represented by general formula (I) and at least one compound selected from the compounds represented by general formulae (IIIa), (IIIb), and (IIIc) or at least one compound selected from the compounds represented by general formulae (IVa), (IVb), and (IVc) was prepared. The compounds contained in the liquid crystal composition LC-7 and the proportions of the compounds are as follows.

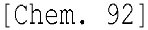

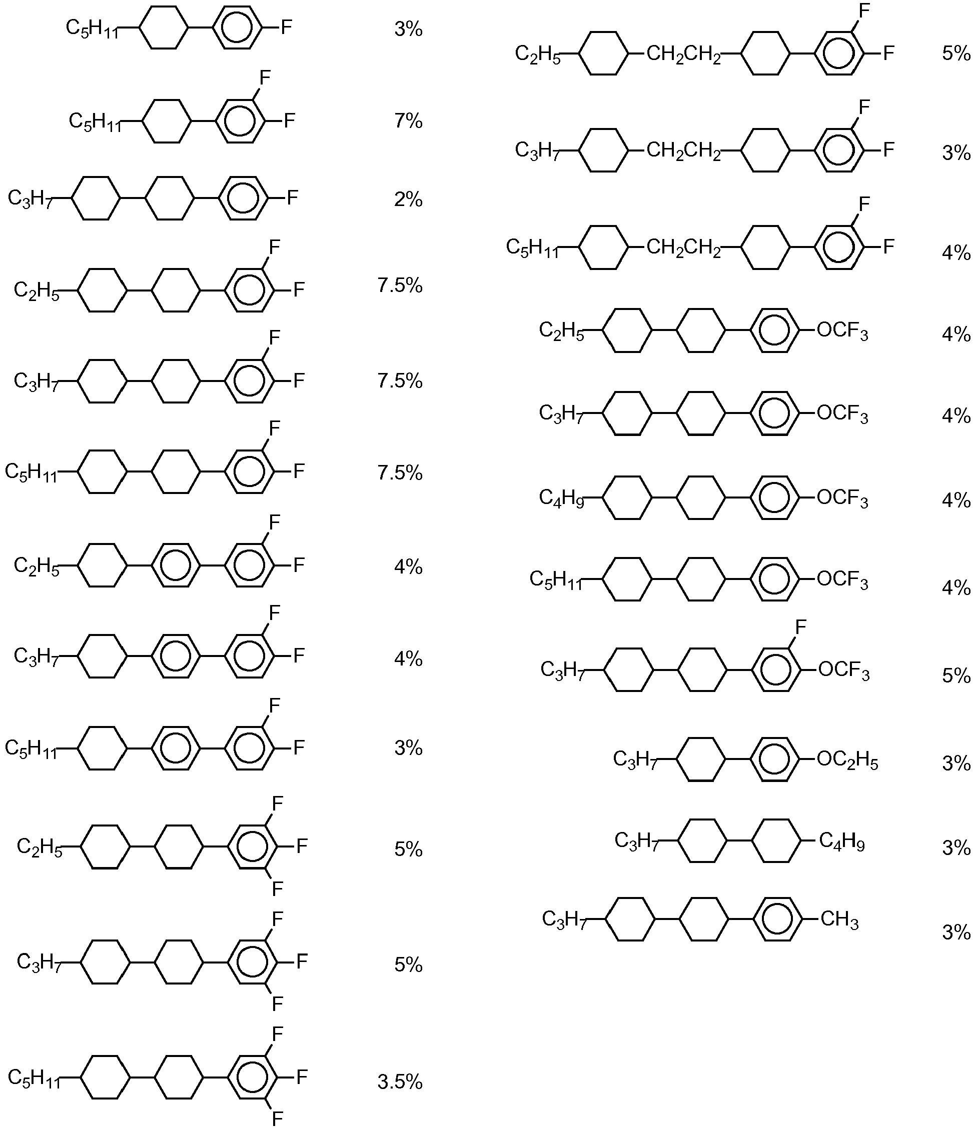

Table 13 shows the physical properties of the liquid crystal composition LC-7.

**[Table 13]**

| | |
|---|---|
| T_{N-I} (°C) | 85.0 |
| Δ*ε* | 5.5 |
| Δn | 0.090 |

A polymerizableliquid crystal composition CLC-40 was prepared by adding 0.25% of a polymerizable compound represented by 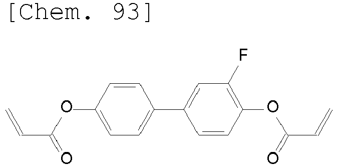 and 0.05% of a polymerizable compound represented by 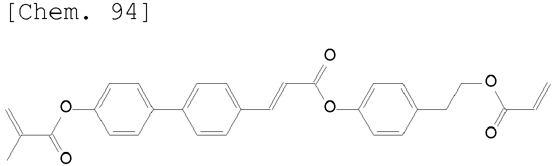 to 99.7% of the liquid crystal composition LC-7 and uniformly dissolving the polymerizable compounds.

### (Comparative Example 27)

A polymerizableliquid crystal composition CLC-41 was prepared by adding 0.3% of the polymerizable compound represented by 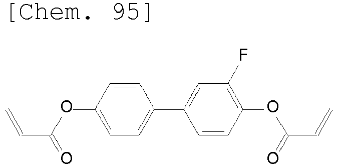 to 99.7% of the liquid crystal composition LC-7 and uniformly dissolving the polymerizable compound.

### (Comparative Example 28)

A polymerizableliquid crystal composition CLC-42 was prepared by adding 0.3% of the polymerizable compound represented by 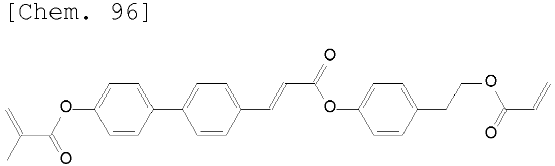 to 99.7% of the liquid crystal composition LC-7 and uniformly dissolving the polymerizable compound.

The polymerizable liquid crystal compositions prepared in Example 14, Comparative Example 27, and Comparative Example 28 were injected, by a vacuum injection method, into cells with ITO, the cells each having a cell gap of 3.5 µm and including polyimide alignment layers that induce a homogeneous alignment. After the injection, each of the liquid crystal cells was irradiated with ultraviolet light using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. For the liquid crystal display elements, the measurement of the pretilt angle, which affects display characteristics (such as the contrast and the response speed), and visual observation of image sticking were conducted. (With regard to the pretilt angle, "A" represents that the change in the pretilt angle is in the range of about 1° to 3°, and "B" represents that the pretilt angle is not changed or the change in the pretilt angle is greater than 3°. With regard to image sticking, "A" represents that a change due to image sticking is not observed, and "B" represents that the display characteristics are not good or image sticking is observed. The number of "Bs" represents that the larger the number of "Bs", the worse the degree.)

**[Table 14]**

| | Example 14 | Comparative Example 27 | Comparative Example 28 |
|---|---|---|---|
| Pretilt angle | AA | AA | B |
| Image sticking | AA | B | AA |

According to the above results, it was confirmed that, by using compounds of the present invention, the change in the pretilt angle was made optimum and the occurrence of image sticking was prevented.

### (Example 15)

A liquid crystal composition LC-8 containing at least one compound selected from the compounds represented by general formula (I) and at least one compound selected from the compounds represented by general formulae (IIIa), (IIIb), and (IIIc) or at least one compound selected from the compounds represented by general formulae (IVa), (IVb), and (IVc) was prepared. The compounds contained in the liquid crystal composition LC-8 and the proportions of the compounds are as follows.

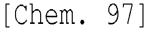

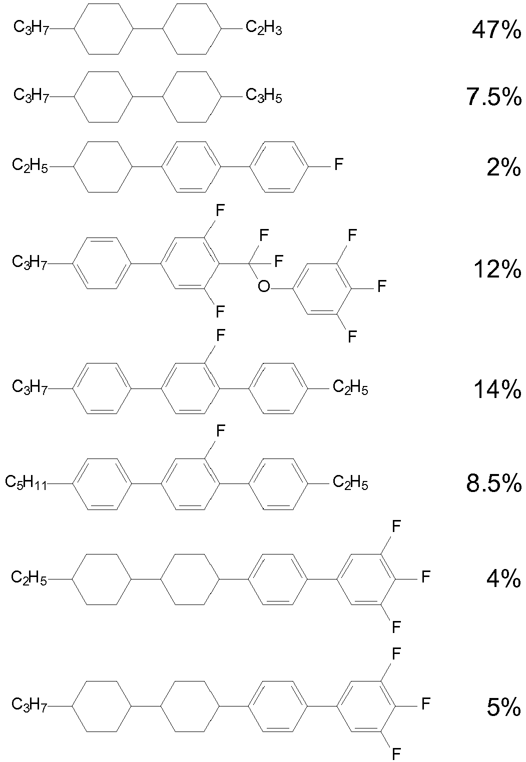

Table 15 shows the physical properties of the liquid crystal composition LC-8.

**[Table 15]**

| | |
|---|---|
| T_{N-I} (°C) | 75.7 |
| Δ*ε* | 3.5 |
| Δn | 0.110 |

A polymerizableliquid crystal composition CLC-43 was prepared by adding 0.15% of a polymerizable compound represented by 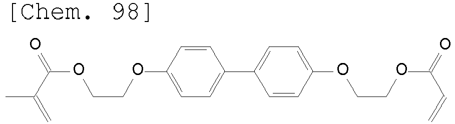 and 0.15% of a polymerizable compound represented by 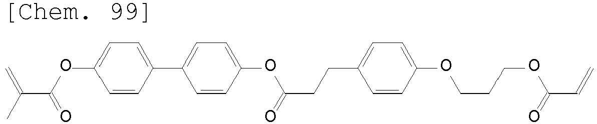 to 99.7% of the liquid crystal composition LC-8 and uniformly dissolving the polymerizable compounds.

### (Comparative Example 29)

A polymerizableliquid crystal composition CLC-44 was prepared by adding 0.3% of the polymerizable compound represented by 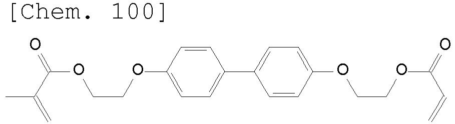 to 99.7% of the liquid crystal composition LC-8 and uniformly dissolving the polymerizable compound.

### (Comparative Example 30)

A polymerizableliquid crystal composition CLC-45 was prepared by adding 0.3% of the polymerizable compound represented by 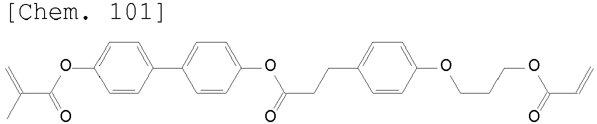 to 99.7% of the liquid crystal composition LC-8 and uniformly dissolving the polymerizable compound.

The polymerizable liquid crystal compositions prepared in Example 15, Comparative Example 29, and Comparative Example 30 were injected, by a vacuum injection method, into cells with ITO, the cells each having a cell gap of 3.5 µm and including polyimide alignment layers that induce a homogeneous alignment. After the injection, each of the liquid crystal cells was irradiated with ultraviolet light using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. For the liquid crystal display elements, the measurement of the pretilt angle, which affects display characteristics (such as the contrast and the response speed), and visual observation of image sticking were conducted. (With regard to the pretilt angle, "A" represents that the change in the pretilt angle is in the range of about 1° to 3°, and "B" represents that the pretilt angle is not changed or the change in the pretilt angle is greater than 3°. With regard to image sticking, "A" represents that a change due to image sticking is not observed, and "B" represents that the display characteristics are not good or image sticking is observed. The number of "Bs" represents that the larger the number of "Bs", the worse the degree.)

**[Table 16]**

| | Example 15 | Comparative Example 29 | Comparative Example 30 |
|---|---|---|---|
| Pretilt angle | A | A | B |
| Image sticking | A | B | A |

According to the above results, it was confirmed that, by using compounds of the present invention, the change in the pretilt angle was made optimum and the occurrence of image sticking was prevented.

### (Example 16)

A liquid crystal composition LC-9 containing at least one compound selected from the compounds represented by general formula (I) and at least one compound selected from the compounds represented by general formulae (IIIa), (IIIb), and (IIIc) or at least one compound selected from the compounds represented by general formulae (IVa), (IVb), and (IVc) was prepared. The compounds contained in the liquid crystal composition LC-9 and the proportions of the compounds are as follows.

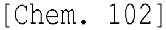

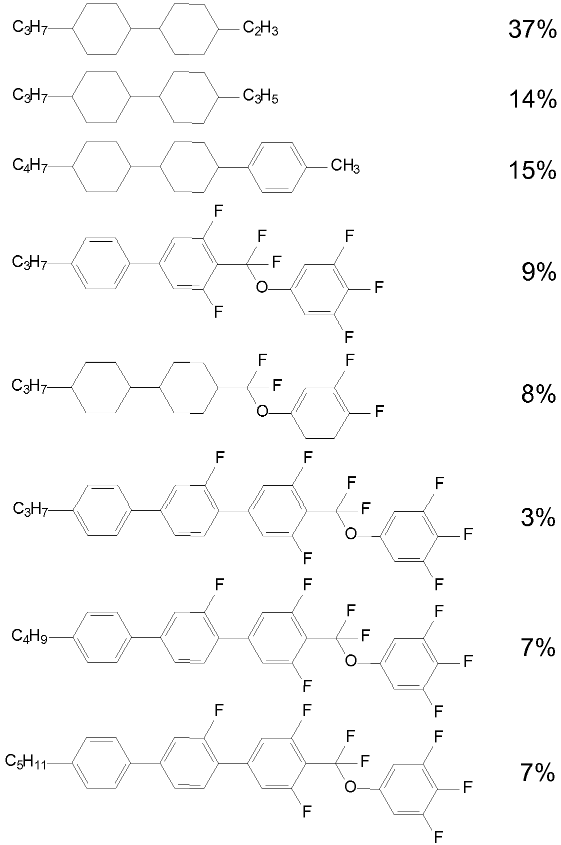

Table 17 shows the physical properties of the liquid crystal composition LC-9.

**[Table 17]**

| | |
|---|---|
| T_{N-I} (°C) | 82.4 |
| Δ*ε* | 8.6 |
| Δn | 0.100 |

A polymerizableliquid crystal composition CLC-46 was prepared by adding 0.25% of a polymerizable compound represented by 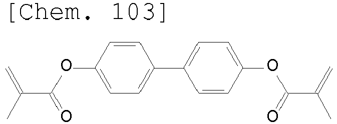 and 0.15% of a polymerizable compound represented by 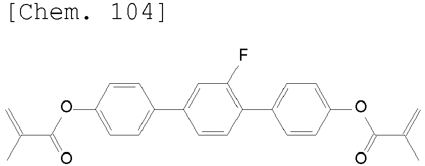 to 99.6% of the liquid crystal composition LC-9 and uniformly dissolving the polymerizable compounds.

### (Comparative Example 31)

A polymerizableliquid crystal composition CLC-47 was prepared by adding 0.4% of the polymerizable compound represented by 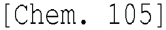 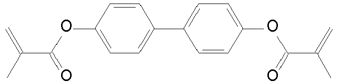 to 99.6% of the liquid crystal composition LC-9 and uniformly dissolving the polymerizable compound.

### (Comparative Example 32)

A polymerizableliquid crystal composition CLC-48 was prepared by adding 0.4% of the polymerizable compound represented by 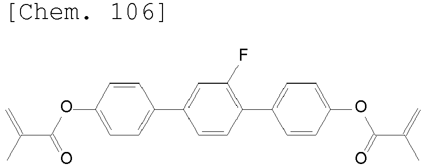 to 99.6% of the liquid crystal composition LC-9 and uniformly dissolving the polymerizable compound.

The polymerizable liquid crystal compositions prepared in Example 16, Comparative Example 31, and Comparative Example 32 were injected, by a vacuum injection method, into cells with ITO, the cells each having a cell gap of 3.5 µm and including polyimide alignment layers that induce a homogeneous alignment. After the injection, each of the liquid crystal cells was irradiated with ultraviolet light using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. For the liquid crystal display elements, the measurement of the pretilt angle, which affects display characteristics (such as the contrast and the response speed), and visual observation of image sticking were conducted. (With regard to the pretilt angle, "A" represents that the change in the pretilt angle is in the range of about 1° to 3°, and "B" represents that the pretilt angle is not changed or the change in the pretilt angle is greater than 3°. With regard to image sticking, "A" represents that a change due to image sticking is not observed, and "B" represents that the display characteristics are not good or image sticking is observed. The number of "Bs" represents that the larger the number of "Bs", the worse the degree.)

**[Table 18]**

| | Example 16 | Comparative Example 31 | Comparative Example 32 |
|---|---|---|---|
| Pretilt angle | A | A | B |
| Image sticking | A | B | A |

According to the above results, it was confirmed that, by using compounds of the present invention, the change in the pretilt angle was made optimum and the occurrence of image sticking was prevented.

### (Example 17)

A polymerizableliquid crystal composition CLC-49 was prepared by adding 0.27% of a polymerizable compound represented by 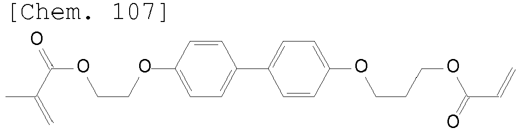 and 0.01% of a polymerizable compound represented by 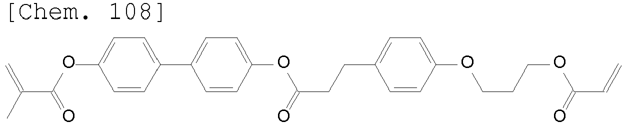 to 99.72% of the liquid crystal composition LC-2 and uniformly dissolving the polymerizable compounds.

### (Example 18)

A polymerizableliquid crystal composition CLC-50 was prepared by adding 0.01% of thepolymerizable compound represented by 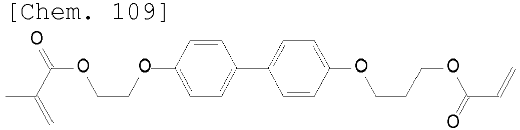 and 0.27% of thepolymerizable compound represented by 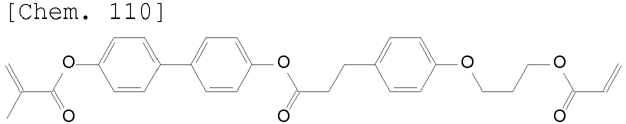 to 99.72% of the liquid crystal composition LC-2 and uniformly dissolving the polymerizable compounds.

### (Example 19)

A polymerizableliquid crystal composition CLC-51 was prepared by adding 0.14% of thepolymerizable compound represented by 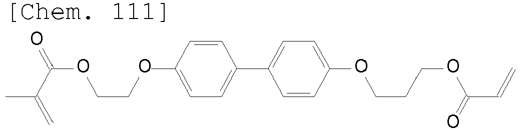 and 0.14% of thepolymerizable compound represented by 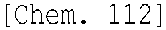 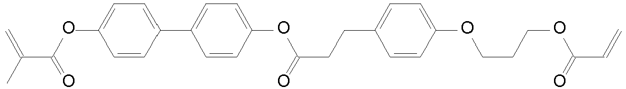 to 99.72% of the liquid crystal composition LC-2 and uniformly dissolving the polymerizable compounds.

### (Example 20)

The polymerizable liquid crystal compositions prepared in Example 17, Example 18, and Example 19 were injected, by a vacuum injection method, into cells with ITO, the cells each having a cell gap of 3.5 µm and including polyimide alignment layers that induce a homeotropic alignment. After the injection, each of the liquid crystal cells was irradiated with ultraviolet light for 1,000 seconds using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. Each of the liquid crystal display elements was disassembled. The amount of residual polymerizablecompounds contained in the liquid crystal composition in the liquid crystal cell was measured to calculate the rate of reaction of the polymerizable compounds per 1,000 seconds. The rates of reactions of the polymerizable compounds in the liquid crystal display elements prepared in Example 17, Example 18, and Example 19 were 21%, 44%, and 30%, respectively.

According to the above results, it was confirmed that, by mixingpolymerizable compounds having different rates of polymerization reaction, the rate of polymerization of the polymerizable compounds in the liquid crystal composition can be controlled.

### (Example 21)

A polymerizableliquid crystal composition CLC-52 was prepared by adding 0.39% of a polymerizable compound represented by 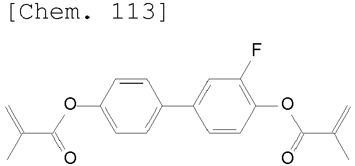 and 0.01% of a polymerizable compound represented by 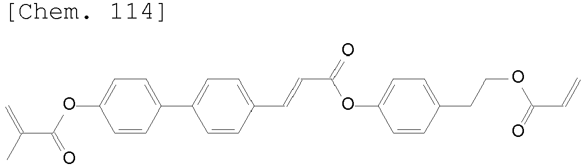 to 99.6% of the liquid crystal composition LC-3 and uniformly dissolving the polymerizable compounds.

### (Example 22)

A polymerizableliquid crystal composition CLC-53 was prepared by adding 0.01% of thepolymerizable compound represented by 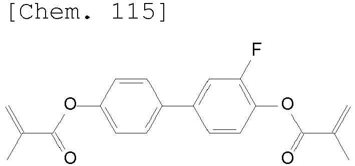 and 0.39% of thepolymerizable compound represented by 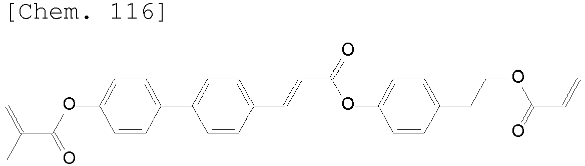 to 99.6% of the liquid crystal composition LC-3 and uniformly dissolving the polymerizable compounds.

### (Example 23)

A polymerizableliquid crystal composition CLC-54 was prepared by adding 0.35% of thepolymerizable compound represented by 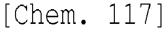 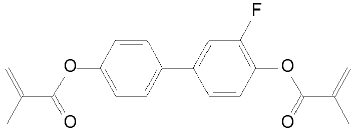 and 0.05% of thepolymerizable compound represented by 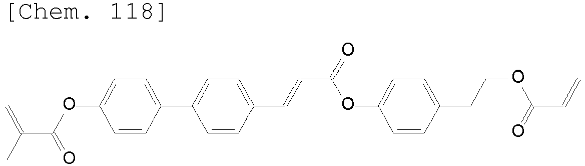 to 99.6% of the liquid crystal composition LC-3 and uniformly dissolving the polymerizable compounds.

### (Example 24)

A polymerizableliquid crystal composition CLC-55 was prepared by adding 0.2% of thepolymerizable compound represented by 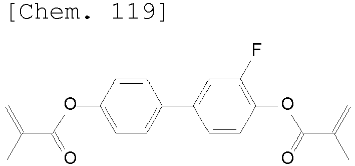 and 0.2% of thepolymerizable compound represented by 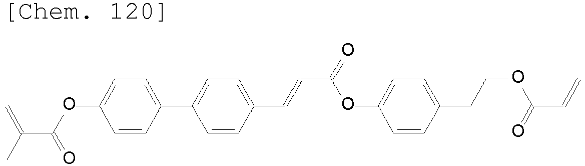 to 99.6% of the liquid crystal composition LC-3 and uniformly dissolving the polymerizable compounds.

### (Example 25)

The polymerizable liquid crystal compositions prepared in Example 21, Example 22, Example 23, and Example 24 were injected, by a vacuum injection method, into cells with ITO, the cells each having a cell gap of 3.5 µm and including polyimide alignment layers that induce a homeotropic alignment. After the injection, each of the liquid crystal cells was irradiated with ultraviolet light for 1,000 seconds using a high-pressure mercury lamp having a peak wavelength in the range of 300 to 400 nm while applying a voltage. Thus, homeotropic-alignment liquid crystal display elements in which the polymerizable compounds in the polymerizableliquid crystal compositions were polymerized were obtained. Each of the liquid crystal display elements was disassembled. The amount of residual polymerizablecompounds contained in the liquid crystal composition in the liquid crystal cell was measured to calculate the rate of reaction of the polymerizable compounds per 1,000 seconds. The rates of reactions of the polymerizable compounds in the liquid crystal display elements prepared in Example 21, Example 22, Example 23, and Example 24 were 42%, 93%, 50%, and 75%, respectively.

According to the above results, it was confirmed that, by mixingpolymerizable compounds having different rates of polymerization reaction, the rate of polymerization of the polymerizable compounds in the liquid crystal composition can be controlled.

## Claims

1. A liquid crystalcomposition comprising at least twopolymerizable compounds having different rates of polymerization reaction.

2. Theliquid crystalcompositionaccording to Claim 1, comprising at least one compound represented by general formula (I): 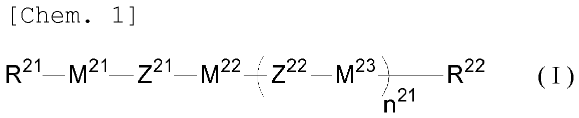 (wherein R²¹ and R²² each independently represent an alkyl group having 1 to 15 carbon atoms, where at least one -CH₂-in the alkyl group may be substituted with -O-, -CH=CH-, - CO-, -OCO-, -COO- -C=C-, -CF₂O-, or -OCF₂- so that oxygen atoms are not directly adjacent to each other and at least one hydrogen atom in the alkyl group may be optionally substituted with a halogen, M²¹, M²², and M²³ each independently represent a group selected from the group consisting of
(a) a trans-1,4-cyclohexylene group (where one methylene group or two or more non-adjacent methylene groups in the trans-1,4-cyclohexylenegroup may each be substituted with - O- or -S-),
(b) a 1,4-phenylene group (where one -CH= or two or more non-adjacent -CH= in the 1,4-phenylene group may each be substituted with a nitrogen atom), a 2-fluoro-1,4-phenylene group, and a 3-fluoro-1,4-phenylene group, and
(c) a 1,4-cyclohexenylene group, a 1,4-bicyclo[2.2.2]octylene group, a piperidine-2,5-diyl group, a naphthalene-2,6-diyl group, a decahydronaphthalene-2,6-diyl group, and a 1,2,3,4-tetrahydronaphthalene-2,6-diyl group, when a plurality of M²³s are present, they may be the same or different,
Z²¹ and Z²² each independently representa single bond, -CH₂CH₂-, -(CH₂)₄-, -OCH₂-, -CH₂O-, -OCF₂-, -CF₂O-, -CH=CH-, -CH=N-N=CH-, or -C≡C-, when a plurality of Z²²s are present, they may be the same or different, and n²¹ represents 0, 1, or 2.)

3. Theliquid crystalcompositionaccording to Claim 1 or 2, wherein the polymerizable compounds are each independently a compound represented by general formula (II): 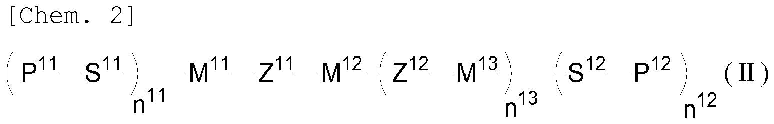 (wherein P¹¹ and P¹² each independently represent a polymerizable functional group, S¹¹ and S¹² each independently represent a single bond or an alkyl group having 1 to 15 carbon atoms, where at least one -CH₂- in the alkyl group may be substituted with -O-, -CH=CH-, -CO-,-C=C-, -OCO-, or -COO- so that oxygen atoms are not directly adjacent to each other, M¹¹, M¹², and M¹³ each independently represent a group selected from the group consisting of
(a) a trans-1,4-cyclohexylene group (where one methylene group or two or more non-adjacent methylene groups in the trans-1,4-cyclohexylene group may each be substituted with - O- or -S-),
(b) a phenylene group (where one -CH= or two or more non-adjacent -CH= in the phenylene group may each be substituted with a nitrogen atom, hydrogen atoms contained in any of these groups may be independently unsubstituted, or hydrogen atoms contained in any of these groups may be substituted with a fluorine atom, a chlorine atom, an alkyl group having 1 to 8 carbon atoms, a halogenated alkyl group having 1 to 8 carbon atoms, a halogenated alkoxy group having 1 to 8 carbon atoms, or an alkoxy group having 1 to 8 carbon atoms), and
(C)a cyclohexenylene group, a bicyclo[2.2.2]octylene group, a piperidine group, a naphthalene group, a decahydronaphthalene group, and a tetrahydronaphthalene group,
when a plurality of M¹³s are present, they may be the same or different, Z¹¹ and Z¹² each independently represent a single bond, -O-, -S-, -OCH₂-, -CH₂O-, -CO-, -C₂H₄-,-COO-, -OCO-,-OCOOCH₂-, -CH₂OCOO-, -CO-NR¹¹-, -NR¹¹-CO-, -SCH₂-, -CH₂S-,-CH=CH-COO-, -OOC-CH=CH-, -COOC₂H₄-, -OCOC₂H₄-, -C₂H₄OCO-,-C₂H₄COO-, -OCOCH2-, -CH₂COO-, -CH=CH-, -CF=CH-, -CH=CF-, -CF₂-, -CF₂O-, -OCF₂-, -CF₂CH₂-, -CH₂CF₂-, -CF₂CF₂-, or -C=C- (where R¹¹ represents an alkyl group having 1 to 4 carbon atoms), n¹¹ and n¹² each independently represent 0, 1, 2, or 3, n¹¹ + n¹² represents 2 to 6, and n¹³ represents 0, 1, or 2.)

4. The liquid crystalcompositionaccording to any one of Claims 1 to 3, comprising at least one compoundselected from the group consisting ofcompounds represented by general formulae (IIIa), (IIIb), and (IIIc): 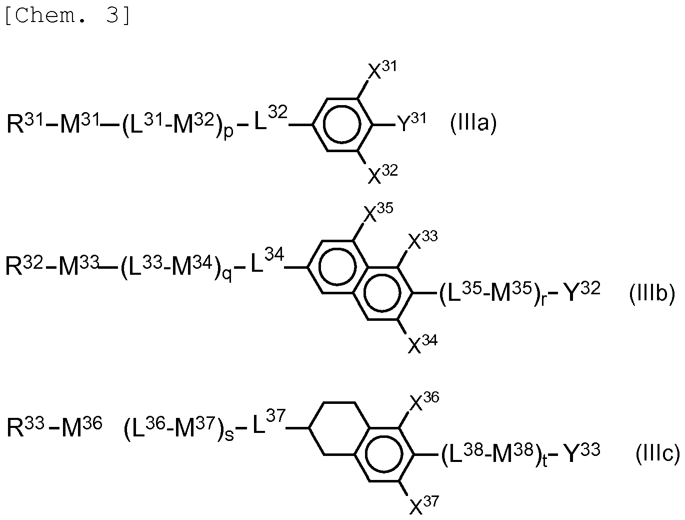 (wherein R³¹, R³², and R³³ each independently represent an alkyl group having 1 to 10 carbon atoms or an alkenyl group having 2 to 10 carbon atoms,where one methylene group or two or more non-adjacent methylene groups in any of these groups may each be substituted with -O- or -S- and at least one hydrogen atom in any of these groups may be substituted with a fluorine atom or a chlorine atom,
M³¹, M³², M³³, M³⁴, M³³, M³⁶, M³⁷, and M³⁸ each independently represent a group selected from the group consisting of (d) a trans-1,4-cyclohexylene group (where one methylene group or two or more non-adjacent methylene groups in the trans-1,4-cyclohexylene group may each be substituted with - O- or -S-),
(e) a 1,4-phenylene group (where one -CH= or two or more non-adjacent -CH= in the 1,4-phenylene group may each be substituted with a nitrogen atom), a 3-fluoro-1,4-phenylene group, and a 3,5-difluoro-1,4-phenylene group, and
(f) a 1,4-cyclohexenylene group, a 1,4-bicyclo[2.2.2]octylene group, a piperidine-2,5-diyl group, a naphthalene-2,6-diyl group, a 1,2,3,4-tetrahydronaphthalene-2,6-diyl group, anda decahydronaphthalene-2,6-diyl group, where a hydrogen atom contained in any of the groups (d), the groups (e), and the groups (f) may be substituted with a cyano group, a fluorine atom, a trifluoromethyl group, a trifluoromethoxy group, or a chlorine atom,
L³¹, L³², L³³, L³⁴, L³⁵, L³⁶, L³⁷, and L³⁸ each independently represent a single bond, -COO-, -OCO-, -CH₂CH₂-, -(CH₂)₄-,-OCH₂-, -CH₂O-, -OCF₂-, -CF₂O-, or -C=C-, when a plurality ofat least one of M³², M³⁴, M³⁵, M³⁷, M³⁸, L³¹, L³³, L³⁵, L³⁶, and L³⁸ are present, they may be the same or different,
X³¹, X³², X³³, X³⁴, X³⁵, X³⁶, and X³⁷ each independently represent a hydrogen atom or a fluorine atom,
Y³¹, Y³², and Y³³ each independently represent a hydrogen atom, a fluorine atom, a chlorine atom, a cyano group, a thiocyanate group, a trifluoromethoxy group, a trifluoromethyl group, a 2,2,2-trifluoroethyl group, or a difluoromethoxy group,
at least one of X³¹, X³², and Y³¹ represents a fluorine atom,
a chlorine atom, a cyano group, a thiocyanate group, a trifluoromethoxy group, a trifluoromethyl group, a 2,2,2-trifluoroethyl group, or a difluoromethoxy group or at least one hydrogen atom contained in M³¹ or M³² represents a cyano group, a fluorine atom, a trifluoromethyl group, a trifluoromethoxy group, or a chlorine atom,
at least one of X³³, X³⁴, X³⁵, and Y³² represents a fluorine atom, a chlorine atom, a cyano group, a thiocyanate group, a trifluoromethoxy group, a trifluoromethyl group, a 2,2,2-trifluoroethyl group, or a difluoromethoxy group or at least one hydrogen atom contained in M³³, M³⁴, or M³⁵ represents a cyano group, a fluorine atom, a trifluoromethyl group, a trifluoromethoxy group, or a chlorine atom,
at least one of X³⁶, X³⁷, and Y³³ represents a fluorine atom,
a chlorine atom, a cyano group, a thiocyanate group, a trifluoromethoxy group, a trifluoromethyl group, a 2,2,2-trifluoroethyl group, or a difluoromethoxy group or at least one hydrogen atom contained in M³⁶, M³⁷, and M³⁸ represents a cyano group, a fluorine atom, a trifluoromethyl group, a trifluoromethoxy group, or a chlorine atom,
p, q, r, s, and t each independently represent 0, 1, or 2, and q + r and s + t each represent 2 or less) or
at least one compoundselected from the group consisting of compounds represented by general formulae (IVa), (IVb), and (IVc): 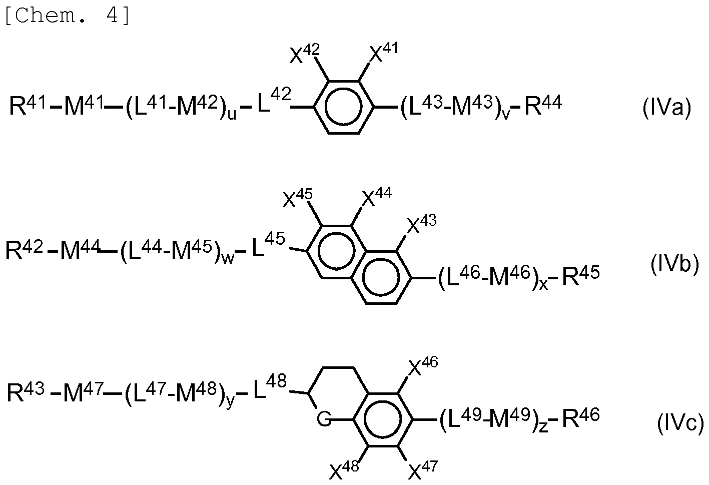 (wherein R⁴¹, R⁴², R⁴³, R⁴⁴, R⁴⁵, and R⁴⁶ each independently represent an alkyl grouphaving 1 to 10 carbon atoms or an alkenyl group having 2 to 10 carbon atoms, where one methylene group or two or more non-adjacent methylene groups in any of these groups may each be substituted with -O- or - S- and at least one hydrogen atom contained in any of these groups may be substituted with a fluorine atom or a chlorine atom,
M⁴¹, M⁴², M⁴³, M⁴⁴, M⁴⁵, M⁴⁶, M⁴⁷, M⁴⁸, and M⁴⁹ each independently represent
(d) a trans-1,4-cyclohexylene group (where one methylene group or two or more non-adjacent methylene groups in the trans-1,4-cyclohexylene group may each be substituted with - O- or -S-),
(e) a 1,4-phenylene group (where one -CH= or two or more non-adjacent -CH= in the 1,4-phenylene group may each be substituted with a nitrogen atom), and
(f) a 1,4-cyclohexenylene group, a 1,4-bicyclo[2.2.2]octylene group, a piperidine-2,5-diyl group, a naphthalene-2,6-diyl group, a 1,2,3,4-tetrahydronaphthalene-2,6-diyl group, anda decahydronaphthalene-2,6-diyl group, where a hydrogen atom contained in any of the groups (d), the groups (e), and the groups (f) may each be substituted with a cyano group, a fluorine atom, a trifluoromethyl group, a trifluoromethoxy group, or a chlorine atom,
L⁴¹, L⁴², L⁴³, L⁴⁴, L⁴⁵, L⁴⁶, L⁴⁷, L⁴⁸, and L⁴⁹ each independently represent a single bond, -COO-, -OCO-, -CH₂CH₂-, -(CH₂)₄-,-OCH₂-, -CH₂O-, -OCF₂-, -CF₂O-, or -C=C-, when a plurality of at least one of M⁴², M⁴³, M⁴⁵, M⁴⁶, M⁴⁸, M⁴⁹, L⁴¹, L⁴³, L⁴⁴, L⁴⁶, L⁴⁷, and L⁴⁹ are present, they may be the same or different, X⁴¹, X⁴², X⁴³, X⁴⁴, X⁴⁵, X⁴⁶, X⁴⁷ and X⁴⁸ each independently represent a hydrogen atom, a trifluoromethyl group, a trifluoromethoxy group, or a fluorine atom, any one of X⁴¹ and X⁴² represents a fluorine atom, any one of X⁴³, X⁴⁴, and X⁴⁵ represents a fluorine atom, and any one of X⁴⁶, X⁴⁷, and X⁴⁸ represents a fluorine atom, X⁴⁶ and X⁴⁷ do not represent fluorine atoms at the same time, X⁴⁶ and X⁴⁸ do not represent fluorine atoms at the same time,
G represents a methylene group or -O-,
u, v, w, x, y, and z each independently represent 0, 1, or 2, and u + v, w + x, and y + z each represent 2 or less.)

5. The liquid crystalcompositionaccording to any one of Claims 1 to 4, comprising at least onepolymerizable compound that absorbs light of 350 nm or more and at least one polymerizable compound that does not absorb light of 350 nm or more.

6. The liquid crystalcompositionaccording to any one of Claims 1 to 4, comprising a polymerizable compound where n¹¹ + n¹² in general formula (II) represents 1 or 2 and a polymerizable compound where n¹¹ + n¹² in general formula (I) represents 2 or 3.

7. The liquid crystalcompositionaccording to any one of Claims 1 to 4, comprising a polymerizable compound where n¹³ in general formula (II) represents 0 and a polymerizable compound where n¹³ in general formula (I) represents 1 or 2.

8. The liquid crystalcompositionaccording to any one of Claims 1 to 4, comprising a polymerizable compound where P¹¹ and P¹² in general formula (II) each represent a methacryloyloxy group and a polymerizable compound where P¹¹ and P¹² in general formula (I) each represent an acryloyloxy group.

9. The liquid crystalcompositionaccording to any one of Claims 1 to 4, comprising a polymerizable compound where Z¹¹ and Z¹² in general formula (II) each represent a single bond and a polymerizable compound where Z¹¹ and Z¹² in general formula (II) each independently represent -O-, -S-, -OCH₂-, -CH₂O-, -CO-, -C₂H₄-,-COO-, -OCO-, -OCOOCH₂-, -CH₂OCOO-, -CO-NR¹¹-, -NR¹¹-CO-, -SCH₂-, -CH₂S-, -CH=CH-COO-, -OOC-CH=CH-,-COOC₂H₄-, -OCOC₂H₄-, -C₂H₄OCO-, -C₂H₄COO-, -OCOCH₂-, -CH₂COO-, -CH=CH-, -CF=CH-, -CH=CF-, -CF₂-, -CF₂O-, -OCF₂-, -CF₂CH₂-,-CH₂CF₂-, -CF₂CF₂-, or -C=C- (where R¹¹ represents an alkyl group having 1 to 4 carbon atoms).

10. The liquid crystalcompositionaccording to any one of Claims 1 to 4, comprising a polymerizable compound where S¹¹ and S¹² in general formula (II) each represent a single bond and a polymerizable compound where at least one of S¹¹ and S¹² in general formula (I) represents an alkyl group having 1 to 15 carbon atoms(where at least one -CH₂- in the alkyl group may be substituted with -O-, -CH=CH-, -CO-, -OCO-, or -COO- so that oxygen atoms are not directly adjacent to each other).

11. A liquid crystal display element comprising the liquid crystal composition according to any one of Claims 1 to 10, wherein a liquid crystal alignment capability is provided by polymerizing the polymerizable compounds in the liquid crystal composition.

12. A method for producing a liquid crystal composition for a liquid crystal element to which a liquid crystal alignment capability is provided by polymerizing polymerizable compounds in the liquid crystal composition,the method comprisingcontrollinga rate of polymerizationof thepolymerizable compounds in the liquid crystal composition by incorporating at least twopolymerizable compounds having different rates of polymerization reaction.
